# EUROPÄISCHE PATENTSCHRIFT

(11) **EP 1 953 999 B1**
(45) Veröffentlichungstag und Bekanntmachung des Hinweises auf die Patenterteilung: **22.05.2019**
(21) Anmeldenummer: 08151058.8
(22) Anmeldetag: 05.02.2008
(51) Int. Cl.: H04L 29/08

(54) **Vorrichtung und Verfahren zur Bereitstellung von Daten**
Method and device for preparing data
Dispositif et procédé de préparation de données

(30) Priorität: 05.02.2007 DE 102007006432
(43) Veröffentlichungstag der Anmeldung: 06.08.2008
(73) Patentinhaber: Schmidt, Christian, 22179 Hamburg (DE); Grap, Arndt-Helge, 20257 Hamburg (DE)
(72) Erfinder: Schmidt, Christian, 22179 Hamburg (DE); Grap, Arndt-Helge, 20257 Hamburg (DE)
(74) Vertreter: Eisenführ Speiser

(56) Entgegenhaltungen:
- WO-A1-00/27124
- WO-A1-00/49807
- WO-A1-01/15428
- WO-A2-01/50759
- WO-A2-02/093799
- US-A1- 2001 037 507
- LIANG-JIE ZHANG ET AL: "A per-object-granularity tracking mechanism for interactive TV viewership estimation and program rating" MULTIMEDIA SOFTWARE ENGINEERING, 2002. PROCEEDINGS. FOURTH INTERNATION AL SYMPOSIUM ON DEC. 11-13, 2002, PISCATAWAY, NJ, USA,IEEE, 11. Dezember 2002 (2002-12-11), Seiten 98-105, XP010632739 ISBN: 978-0-7695-1857-2

## Beschreibung

Die Erfindung betrifft ein Verfahren und eine Vorrichtung zur Übertragung und Bereitstellung von Daten an einen Benutzer.

Die Übertragung und Bereitstellung von Daten ist regelmäßig dann erforderlich, wenn von einem Basisgerät, wie beispielsweise einem Server, Daten auf ein Benutzergerät, wie beispielsweise einen Personal Computer oder ein mobiles Datenspeicher- und Bereitstellungsmedium, Daten zu übertragen sind und auf diesem Benutzergerät bereitzustellen sind. Unter Bereitstellung der Daten ist in diesem Zusammenhang das aufbereitete Zur-Verfügung-stellen der Daten zu verstehen, beispielsweise in Form einer visuellen und akustischen Wiedergabe von durch die Daten definierten Texten, in Form einer akustischen Wiedergabe von durch die Daten definierten Audiodaten oder in Form einer visuellen Wiedergabe von durch die Daten definierten Videodaten.

Für eine solche Übertragung und Bereitstellung von Daten stehen verschiedene Systeme im Stand der Technik bereit. So ist es zum einen für den Anwendungsbereich mobiler Audio-Abspielgeräte bekannt, die Audiodaten von einem Basisgerät auf das mobile Gerät zu übertragen. In dieser Anwendung ist es weiterhin bekannt, auf dem Basisgerät oder dem mobilen Gerät Abspielreihenfolgen für die Audiodaten zu bestimmen und die Audiodaten dann bei ihrer Wiedergabe gemäß der so vorbestimmten Abspielreihenfolge aneinandergereiht bereitzustellen und folglich wiederzugeben. Ein Nachteil dieses Verfahrens liegt darin, dass der Benutzer die Abspielreihenfolgen auf dem Basisgerät oder dem Benutzergerät selbst zu programmieren hat und bei mehrfacher wiederholter Auswahl einer einmal programmierten Abspielreihenfolge eine stets wiederkehrende Aneinanderreihung derselben Audiodateien bereitgestellt bekommt. Um der so auftretenden Eintönigkeit entgegenzuwirken, ist es bekannt, die Audiodaten per zufälliger Aneinanderreihung bereitzustellen. Hierdurch kann zwar die Eintönigkeit der programmierten Ordnungsreihenfolgen vermieden werden, jedoch werden durch die zufällige Aneinanderreihung beispielsweise für den Fall von Audiodaten Dateneinheiten hintereinander abgespielt, welche stilistisch, rhythmisch oder in anderer Weise nicht harmonieren und folglich eine insgesamt unharmonische Aneinanderreihung der Audiodaten bereitgestellt.

Es ist weiterhin seit langem bekannt, Audiodaten von einer Sendeanstalt auf einen Radioempfänger und in prinzipiell übereinstimmender Weise Videodaten auf einen Fernsehempfänger als Benutzergerät zu übertragen. Hierbei werden die vom Benutzergerät bereitzustellenden, wiederzugebenden Daten in einer in der Sendeanstalt vorbestimmten Reihenfolge an das Benutzergerät übertragen und dort in genau dieser Reihenfolge wiedergegeben. Dieses Übertragungs- und Bereitstellungsverfahren hat jedoch eine Reihe von Nachteilen. Einerseits ist die Menge der zu übertragenden Daten hoch, da stets die Audio- bzw. Video-Daten, welche dem Benutzer bereitgestellt werden sollen, in Echtzeit übertragen werden müssen, selbst dann, wenn sich Daten wiederholen sollten, die beispielsweise bereits zu einem früheren Zeitpunkt gesendet wurden oder auf einem anderen Übertragungskanal gesendet werden. Des Weiteren ist die Bereitstellung der Daten von der Übertragung der Daten in Echtzeit abhängig und bei vorübergehender Unterbrechung der Übertragung, beispielsweise durch klimatische Einflüsse oder bei mobilen Geräten durch vorübergehende geographische oder bautechnische Hindernisse im Übertragungsweg der Daten, bricht die Bereitstellung, und damit die Wiedergabe der Daten, ab und die Audio- bzw. Videowiedergabe wird unterbrochen oder zumindest maßgeblich gestört.

WO 02/093799 A2 betrifft ein Übertragungsverfahren und eine Übertragungseinrichtung für Audio- und/oder visuelle Programme von einem Anbieter an ein oder mehrere Kunden. Dieses Programm wird vom Anbieter mit Hilfe von mindestens einer Basisstation erstellt und an den jeweiligen Kunden über ein Übertragungsnetzwerk in bidirektionaler Kommunikation an ein oder mehrere Kunden übertragen, die mit ein oder mehreren Kundenstationen zur Wiedergabe der Programme ausgestattet sind. Vorzugsweise werden diese Programme vor Ort beim Kunden erstellt, wobei vom Anbieter nur Steuerprogramme mit ggf. aktualisierten Daten an den Kunden übermittelt werden, welche auf eine Abspielsoftware und auf Programmkomponenten zurückgreifen, die auf der Kundenstation gespeichert sind.

US 2001/037507 beschreibt eine Sendeeinrichtung, die interaktive Inhalte an eine Empfangseinheit in der Form eines Datenkarussells übermittelt. Dabei werden diese Inhalte kurz vor einem vorgesehenen Wiedergabebeginn gesendet und in der Empfangseinheit zwischengespeichert. So wird sichergestellt, dass die Wiedergabe ohne Verzögerungen durch das Laden der Inhalte dem Programmplan gemäß zum vorgesehenen Zeitpunkt beginnen kann.

WO 01/15428 A1 beschreibt ein Verteilungsschema zur Verteilung eines oder mehrerer Programme zur Wiedergabe durch Kunden, wobei der Zeitpunkt mindestens einer ersten Wiedergabe von einer zentralen Stelle aus präzise gesteuert wird.

WO 01/50759 A2 betrifft im Allgemeinen auf Terminierungsverfahren und insbesondere auf Verfahren zur Terminierung eines Informationsflusses durch Auswahl und Terminierung von Teilen von Modulen mit den höchsten Prioritäten.

WO 00/27124 A1 bezieht sich auf den Bereich der Rundfunksysteme. Insbesondere geht es bei dieser Erfindung um die Art des Sammelns und der Rückmeldung der Zuschauer an eine Sendung.

US 2005/0098023 A1 bezieht sich auf mobile Medienwiedergabegeräte. Insbesondere betrifft die Erfindung die Erstellung von Wiedergabelisten von Medieninhalten zur Wiedergabe auf mobilen Medienwiedergabegeräten.

US 2002/0002542 A1 betrifft ein Informationswiedergabeverfahren und ein Informationsbereitstellungsverfahren.

US 2003/0215213 A1 beschreibt ein Zeitverschiebungswiedergabezeit-Steuerungsverfahren zum Steuern einer Zeitverschiebungswiedergabezeit und ein Informationswiedergabegerät zum Steuern der Zeitverschiebungswiedergabezeit zur Verwendung mit einem Zeitverschiebungswiedergabesystem, das Bilddaten und Tondaten auf einem Speichermedium empfangen und vorübergehend speichern und dann ein Bild und Ton innerhalb einer vorbestimmten Zeit aus den auf dem Speichermedium aufgezeichneten Daten wiedergeben kann.

US 2003/0170000 A1 betrifft ein Videowiedergabesteuergerät und ein Inhaltswiedergabesteuergerät, die zur Wiedergabe von Videodaten in einem digitalen Theater, einem Heimvideoplayer, einem Heimvideospielgerät oder dergleichen verwendet werden sollen. Ferner betrifft US 2003/0170000 A1 ein Verfahren zur Bereitstellung kommerzieller Informationen, bei dem kommerzielle Informationen an ein solches Gerät geliefert werden.

US 2007/0014536 A1 bezieht sich auf Medienübertragungs- und Verteilungssysteme, in denen Massenspeicher zur Reduzierung des Bandbreitenbedarfs eingesetzt werden.

US 2006/0212444 A1 betrifft Methoden und Systeme zur Nutzung kontextueller Rückmeldung zur Erstellung und Änderung von Playlisten.

JP 2000/056784 A beschreibt ein automatisches Wiedergabesystem, das aufgebaut ist aus einer Wiedergabedatenverwaltungsvorrichtung, einer mit dieser zur Datenübertragung verbundenen Wiedergabedatenspeichervorrichtung und mehrerer mit diesen wiederum verbundenen Wiedergabevorrichtungen.

Der Erfindung liegt die Aufgabe zugrunde, ein Verfahren zur Übertragung und Bereitstellung von Daten zur Verfügung zu stellen, welches eine hochgradig abwechslungsreiche und vielfältige Bereitstellung von Daten erlaubt und gegenüber vorübergehenden Störungen und Unterbrechungen der Datenübertragung unempfindlich ist.

Diese Aufgabe wird mit einem Verfahren zur Übertragung und Bereitstellung von Daten gelöst, mit den Schritten:
- Bereitstellung von Dateneinheiten in einem Basis-Hauptdatenspeicher eines Basisgeräts,
- Bereitstellung eines Hinweissatzes zu jeder Dateneinheit, in dem zumindest eine für jede Dateneineinheit unterschiedliche Individualkennung enthalten ist,
- Erstellen einer Ordnungsreihenfolge der Dateneinheiten welche eine Folge einer Mehrzahl von Individualkennungen anhand vorbestimmter, von einem Administrator oder von einem Benutzer eingegebener Kriterien bestimmt,
- Erstellen einer Zeit-Zuweisungstabelle zu jeder Ordnungsreihenfolge, wobei in der Zeit-Zuweisungstabelle jedem Ablaufzeitpunkt der in der Ordnungsreihenfolge durch die Individualkennungen bestimmten Folge von Dateneinheiten zumindest eine vorbestimmte Tageszeit, vorzugsweise eine vorbestimmte Tageszeit an einem vorbestimmten Datum und jeder Dateneinheit zumindest eine Tageszeit oder ein Ablaufzeitpunkt in der Zeit-Zuweisungstabelle zugewiesen wird,
- Übertragen mehrerer Dateneinheiten, zumindest einer Ordnungsreihenfolge und der dieser zugeordneten Zeit-Zuweisungstabelle(n) von dem Basisgerät an ein Benutzergerät,
- Speichern der mehreren Dateneinheiten, der zumindest einen Ordnungsreihenfolge und der dieser zugeordneten Zeit-Zuweisungstabelle(n) auf dem Benutzergerät,
- Auslesen einer Tageszeit und gfs. eines Datums aus einer dem Benutzergerät zugeordneten Benutzer-Uhr,
- Bestimmen des der Tageszeit und gfs. dem Datum zugewiesenen Ablaufzeitpunktes anhand der Zeit-Zuweisungstabelle, und
- Bereitstellen der dem Ablaufzeitpunkt zugewiesenen Dateneinheit anhand der Ordnungsreihenfolge.

Das erfindungsgemäße Verfahren beruht auf einem anderen Prinzip der Datenaufbereitung im Basisgerät, einer anderen Art der Übertragung der Daten und einer anderen Art der Verarbeitung der Daten im Benutzergerät. Erfindungsgemäß werden einerseits zunächst eine Mehrzahl von Dateneinheiten vom Basisgerät auf das Benutzergerät übertragen. Eine Dateneinheit kann dabei beispielsweise eine Audiodatei oder eine Videodatei mit einer bestimmten Wiedergabedauer sein. Diese Übertragung der Dateneinheiten kann innerhalb eines kurzen Zeitraums erfolgen. Die Dateneinheiten werden nach Empfang durch das Benutzergerät im Benutzergerät physikalisch gespeichert. Nachfolgend wird vom Basisgerät eine Ordnungsreihenfolge und eine Zeit-Zuweisungstabelle zu dieser Ordnungsreihenfolge übertragen. Die Ordnungsreihenfolge und die Zeit-Zuweisungstabelle können auch in einer einzigen Tabelle vereint sein. In der Ordnungsreihenfolge ist eine vorbestimmte Aneinanderreihung von Individualkennungen enthalten. Jede Individualkennung verweist auf eine ihr zugewiesene Dateneinheit mit einer entsprechenden Individualkennung. Anhand der Ordnungsreihenfolge ist somit eine Reihenfolge festgelegt, in welcher die Dateneinheiten bereitgestellt werden sollen. In der Zeit-Zuweisungstabelle ist für jeden Ablaufzeitpunkt der so vorbestimmten Reihenfolge der Dateneinheiten eine Tageszeit und gegebenenfalls ein Datum bestimmt. Dabei ist diese Zeitzuordnung so gewählt, dass die Ordnungsreihenfolge zu einem bestimmten Zeitpunkt und gegebenenfalls ein Datum mit der ersten Dateneinheit startet und hierauf folgend in der vorgesehenen Reihenfolge durchlaufen wird, wodurch sich eine chronologische Zuordnung der Ablaufzeit zur fortschreitenden Tageszeit ergibt.

Ordnungsreihenfolge und Zeit-Zuweisungstabelle werden ebenfalls innerhalb eines kurzen Zeitraums vom Basisgerät auf das Benutzergerät übertragen und im Benutzergerät gespeichert.

Das Benutzergerät verfügt erfindungsgemäß über eine Uhr, welche die Tageszeit und gegebenenfalls ein Datum angibt. Möchte ein Benutzer des Benutzergeräts die Wiedergabe der Dateneinheiten anhand der Ordnungsreihenfolge starten, so wird anhand der von der Uhr des Benutzergeräts angegeben Tageszeit der entsprechende Ablaufzeitpunkt in der Ordnungsreihenfolge anhand der Zeit-Zuweisungstabelle ermittelt und dann die sich aus der Ordnungsreihenfolge für diesen Ablaufzeitpunkt ergebende Dateneinheit an der für den Ablaufzeitpunkt entsprechenden Stelle bereitgestellt, beispielsweise um sie dem Benutzer wiederzugeben.

Auf diese Weise ermöglicht das erfindungsgemäße Verfahren dem Benutzer den Eindruck eines tagesaktuellen Radioprogramms, wenn es sich um Audiodateien handelt, oder eines tagesaktuellen Fernsehprogramms, wenn es sich um Video-daten handelt. Für das erfindungsgemäße Verfahren ist es dabei jedoch entgegen den bekannten Verfahren für Radio- und Fernsehprogramme nicht erforderlich, eine permanente Datenübertragung zwischen Sendestation und Radio bzw. Fernseher aufrechtzuerhalten. Stattdessen genügt es, wenn zu einem weit vor dem eigentlichen Zugriffszeitpunkt auf die Daten liegenden Zeitpunkt die Dateneinheiten, Ordnungsreihenfolge und Zeit-Zuweisungstabelle einmalig innerhalb kurzer Zeit übertragen und auf dem Benutzergerät gespeichert wurden. Darüber hinaus ermöglicht es das erfindungsgemäße Verfahren, mehrere unterschiedliche Ordnungsreihenfolgen und diesen zugeordnete Zeitzuweisungstabellen zu übertragen und zu speichern und auf diese Weise entweder unterschiedliche Programme für ein und denselben Tag oder Programme für unterschiedliche Tage bereitzustellen. Darüber hinaus ermöglicht es das erfindungsgemäße Verfahren, Dateneinheiten mehrfach bereitzustellen, indem diese in einer Ordnungsreihenfolge mehrfach oder in mehreren Ordnungsreihenfolgen enthalten sind, ohne dass es hierfür erforderlich wäre, eine Dateneinheit mehr als einmal zu übertragen. Stattdessen kann bei jeder Bereitstellung der einmal übertragenen Dateneinheit auf die bereits im Benutzergerät gespeicherte Dateneinheit zugegriffen werden, wodurch die Datenübertragungsmenge signifikant verringert werden kann. Schließlich ermöglicht es das erfindungsgemäße Verfahren noch, den Bestand an Dateneinheiten auf dem Benutzergerät durch regelmäßige Übertragungen ("Updates") aktuell zu halten und auf diese Weise ein fortlaufendes aktuelles Programm durch entsprechend zusammengestellte Ordnungsreihenfolgen bereitzustellen.

Das erfindungsgemäße Verfahren eignet sich für eine Vielzahl von Anwendungen. So ist es einerseits als Dienstleistung eines Dienstleisters gegenüber Endbenutzern gut einsetzbar, welche ein abwechslungsreiches und tagesaktuelles Audio- oder Fernsehprogramm auf ihrem Benutzergerät präsentiert bekommen möchten, das von einem Anbieter von einem Basisgerät zusammengestellt und übertragen wird. Des Weiteren ist es in Anwendungen vorteilhaft, in denen gewerbliche Nutzer ein für die Zwecke ihrer eigenen Kunden abgestimmtes Unterhaltungsprogramm bereitgestellt bekommen möchten und hierbei auf die Dienstleistung eines gewerblichen Anbieters solcher Unterhaltungsprogramme zurückgreifen möchten.

Gemäß einer ersten bevorzugten Ausführungsform werden die Dateneinheiten vor Übertragung auf das Benutzergerät solcherart verschlüsselt, dass auf sie nur über das Benutzergerät, insbesondere nur mittels einer an das Benutzergerät übertragenen Ordnungsreihenfolge zugegriffen werden kann. Ein bei jeder Art der Übertragung von Daten auftretendes Problem ist die Sicherstellung des urheberrechtlichen Schutzes der Daten, welcher gefährdet ist, wenn eine Vervielfältigung und Weiterverbreitung der Daten ohne Hindernisse möglich wäre. Das erfindungsgemäße Verfahren bietet hierzu die optionale Sicherheit, die urheberrechtlich Schutz genießenden Dateneinheiten so zu verschlüsseln, dass sie nur aus einer Ordnungsreihenfolge heraus, welche ihre Individualkennung enthält, zugegriffen werden können. Auf diese Weise kann die Häufigkeit der Wiedergabe der Dateneinheiten genau vorbestimmt und nachkontrolliert werden und folglich die unkontrollierte wiederholte Wiedergabe auf dem Benutzergerät vermieden werden. Es können zugleich auch die Benutzerdaten oder Ordnungsreihenfolgen so verschlüsselt werden, dass sie nur auf demjenigen Benutzergerät verwendet werden können, an welches sie übertragen wurden, so kann auf diese Weise auch der ungehinderten Verbreitung der urheberrechtlich geschützten Dateneinheiten entgegengewirkt werden.

Es ist insbesondere bevorzugt, wenn eine Ordnungsreihenfolge und die ihr zugeordnete Zeit-Zuweisungstabelle in einer Ordnungs+Zeit-Zuweisungstabelle zusammengefasst sind, um auf diese Weise zu einem kompakten Datenformat zu gelangen.

Weiterhin ist es bevorzugt, wenn die Dateneinheiten, Ordnungsreihenfolge(n) und Zeit-Zuweisungstabelle(n) drahtlos übertragen werden. Die drahtlose Übertragung, beispielsweise über ein terrestrisches oder satellitengestütztes Funknetzwerk (GSM, GPRS, WLAN, DVB-T, S-Band-Satellit, Digitalradio) ist einerseits als bereits etablierte Datenübertragungstechnik verfügbar und somit unmittelbar für die Erfindung nutzbar und andererseits aufgrund der geringen, für das erfindungsgemäße Verfahren zu übertragenden Datenmengen in der Lage, die Daten in einer höheren Qualität auf dem Benutzergerät bereitzustellen als mit den bekannten Echtzeit-Übertragungs- und Bereitstellungsverfahren.

Dabei ist es insbesondere bevorzugt, wenn die Dateneinheiten, Ordnungsreihenfolge(n) und/oder Zeit-Zuweisungstabelle(n) als Paket-Multiplex-Signal übertragen werden. Die Übertragung mittels Paket-Multiplex-Signal kann - entgegen bekannter Echtzeit-Übertragungs- und Wiedergabe-Techniken für das erfindungsgemäße Verfahren ohne Einschränkung eingesetzt werden, da das Übertragungs- und Wiedergabeverfahren gemäß der Erfindung nicht darauf angewiesen ist, zu jedem Zeitpunkt der Datenübertragung eine simultane Bereitstellung von Daten und deren Abspielreihenfolge zu verwirklichen. Stattdessen können gemäß des erfindungsgemäßen Verfahrens zunächst die Dateneinheiten selbst als gebündeltes Paket übertragen werden, ohne dass hierbei eine irgendwie geartete Reihenfolge der Dateneinheiten in den übertragenen Informationen enthalten ist. Nach Übersendung dieses Pakets kann dann eine oder mehrere Ordnungsreihenfolgen mit entsprechenden Zeitzuweisungstabellen übertragen werden, wodurch sich auf dem Benutzergerät eine Wiedergabemöglichkeit analog zur Echtzeitübertragung und -wiedergabe konventioneller Radio- und Fernsehprogramme eröffnet. Das erfindungsgemäße Verfahren eignet sich daher insbesondere für eine breitbandige, kurzzeitige Übertragung sämtlicher für die Bereitstellung der Daten auf dem Benutzergerät erforderlichen Informationen an das Benutzergerät mit einer darauf folgenden Möglichkeit, die Übertragung vollständig zu unterbrechen, ohne dass hierdurch die Wiedergabe auf dem Benutzergerät beschränkt würde.

Dabei ist es besonders bevorzugt, wenn die Dateneinheiten, die Ordnungsreihenfolge(n) und die Zeit-Zuweisungstabelle(n) nacheinander übertragen werden.

Insbesondere ermöglicht es das erfindungsgemäße Verfahren vorzugsweise, dass die Dateneinheiten, Ordnungsreihenfolge(n) und/oder Zeit-Zuweisungstabelle(n) in einem Übertragungszeitraum übertragen werden, der kürzer ist als der Wiedergabezeitraum, den die akustische und/oder graphische Wiedergabe von durch die Dateneinheiten definierten Audio- bzw. Videodaten in Anspruch nimmt. Unter einer Wiedergabe im Sinne der Erfindung ist dabei eine konsumierbare Wiedergabegeschwindigkeit im Sinne einer Echtzeitwiedergabe der Dateneinheiten zu verstehen, d.h. die übertragenen Dateneinheiten als Audiodaten oder Videodaten werden in solcher Form dem Benutzer wiedergegeben, dass er sie in der vorgesehenen Abspielzeit konsumieren kann. Diese Fortbildung ermöglicht es, dass der Benutzer bei Nutzung einer kurzen Übertragungszeit, beispielsweise wenigen Minuten, zwischen Basis- und Benutzergerät die Dateneinheiten, Ordnungsreihenfolgen und Zeitzuweisungstabellen auf sein Gerät übertragen erhält, welche für eine die Übertragungszeit übersteigende Wiedergabezeit, beispielsweise von 24 Stunden, ausreichend ist.

Weiterhin ist es bevorzugt, dass die Zeit-Zuweisungstabelle eine Zuweisung der Startzeiten der Dateneinheiten gemäß der Ordnungsreihenfolge zu den Tageszeiten enthält und der Ablaufzeitpunkt, an dem die Bereitstellung beginnt, durch folgende Schritte ermittelt wird:
- Ermitteln derjenigen Startzeit, welche der von der Benutzeruhr bereitgestellten Uhrzeit nächstliegend vorangeht durch Zuordnen der in der Zeit-Zuweisungstabelle enthaltenen Startzeiten zu der Uhrzeit,
- Ermitteln der dieser Startzeit zugeordneten Dateneinheit anhand der Zeit-Zuweisungstabelle und der Ordnungsreihenfolge,
- Ermitteln der ab der Startzeit abgelaufenen Laufzeit der Dateneinheit zu der von der Benutzeruhr bereitgestellten Uhrzeit durch Subtraktion der Startzeit von der Uhrzeit, und
- Zuordnen des der abgelaufenen Laufzeit entsprechenden Zeitpunkts in der Ordnungsreihenfolge dem Ablaufzeitpunkt.

Mit dieser Fortbildungsform wird folglich einerseits die in der Zeitzuweisungstabelle zu speichernde Datenmenge erheblich verringert, da nur noch die Startzeiten der einzelnen Dateneinheiten gemäß der Ordnungsreihenfolge gespeichert werden müssen und jeder Startzeit ein Tageszeitpunkt zugewiesen werden muss. Dementsprechend muss auch lediglich diesem Tageszeitzeitpunkt oder dem ihr entsprechenden Ablaufzeitpunkt in der Ordnungsreihenfolge der entsprechenden Dateneinheit zugeordnet werden. Andererseits wird derjenige Ablaufzeitpunkt, zu dem die Bereitstellung, also beispielsweise die Wiedergabe der Audiodatei, beginnt, solcherart ermittelt, dass die exakt der von der Benutzeruhr bereitgestellten Uhrzeit entsprechende Ablaufzeit hierfür eingesetzt wird. Hierdurch wird eine perfekte Simulation eines chronologisch ablaufenden, fernübertragenen Programms erzielt, da durch diese Art der Bereitstellung auch ein Ablaufzeitpunkt inmitten einer Dateneinheit ausgewählt bzw. bestimmt werden kann.

Alternativ zu dieser Fortbildung kann das erfindungsgemäße Verfahren weiter fortgebildet werden indem die Zeit-Zuweisungstabelle eine Zuweisung der Startzeiten der Dateneinheiten gemäß der Ordnungsreihenfolge zu den Tageszeiten enthält und der Ablaufzeitpunkt, an dem die Bereitstellung beginnt, durch folgende Schritte ermittelt wird:
- Ermitteln derjenigen Startzeit, welche der von der Benutzeruhr bereitgestellten Uhrzeit nächstliegend ist durch Zuordnen der in der Zeit-Zuweisungstabelle enthaltenen Startzeiten zu der Uhrzeit,
- Ermitteln der dieser Startzeit zugeordneten Dateneinheit anhand der Zeit-Zuweisungstabelle und der Ordnungsreihenfolge,
- Bereitstellen dieser Dateneinheit ab ihrer Startzeit in der Ordnungsreihenfolge.

Bei dieser Fortbildung wird vermieden, dass eine Dateneinheit in ihrer Mitte, d.h. unvollständig unter Weglassung bereits zu der Tageszeit abgelaufenen Anteilen, bereitgestellt wird. Stattdessen beginnt die Bereitstellung der Dateneinheiten stets an einem Startzeitpunkt und zu diesem Zweck wird der sich rechnerisch aus der Zeitzuweisungstabelle ergebende Ablaufzeitpunkt auf den nächstliegenden Startzeitpunkt gerundet, wodurch der für die Bereitstellung der Daten ausgewählte Ablaufzeitpunkt entweder vor- oder zurückverlegt wird.

Dabei ist es besonders bevorzugt, wenn diejenige Startzeit ermittelt wird, welche der von der Benutzeruhr bereitgestellten Uhrzeit nächstliegend vorangeht. Auf diese Weise wird stets eine Vorverlegung des Ablaufzeitpunkts erzielt und somit sichergestellt, dass der Benutzer abhängig von der Uhrzeit, an welcher er die Bereitstellung der Daten anfordert, nicht in der Ordnungsreihenfolge vor den sich aus der Zeitzuweisungstabelle ergebenden Tageszeit bewegt, sondern stets der tatsächlichen Tageszeit hinterherläuft oder, für den Fall, dass der Tageszeitpunkt, an er die Bereitstellung der Dateneinheiten anfordert, exakt einem Startzeitpunkt in der Zeit-Zuweisungstabelle entspricht, mit dieser genau gleich läuft.

Gemäß einer weiteren bevorzugten Ausführungsform der Erfindung ist es vorgesehen, dass vom Benutzer über eine Benutzerschnittstelle des Benutzergeräts eingegebene Wertungen logisch mit einer Dateneinheit, einer Individualkennung, der Ordnungsreihenfolge und/oder einem Zeitpunkt der Zeit-Zuweisungstabelle verknüpft werden und die Ordnungsreihenfolge in Abhängigkeit dieser Wertungen verändert wird. Erfindungsgemäß ist vorgesehen, dass Ordnungsreihenfolge und Zeitzuweisungstabelle auf einem Basisgerät erstellt werden und folglich beispielsweise von einem Dienstleister gemäß seinen Vorstellungen zusammengestellt werden. Es ist jedoch zur verbesserten Anpassung dieser Serviceleistung und zur Individualisierung des angebotenen Services vorteilhaft, wenn bei der Zusammenstellung der Dateneinheiten in den Ordnungsreihen auch der individuelle Geschmack eines oder mehrerer Benutzer berücksichtigt werden kann. Dies wird durch die Fortbildung ermöglicht. Die vom Benutzer eingegeben Wertungen können hierbei einerseits intern im Benutzergerät dazu verwendet werden, um Ordnungsreihenfolgen auszuwählen, ausgewählte Ordnungsreihenfolgen zu modifizieren oder dergleichen.

Es ist jedoch insbesondere bevorzugt, wenn die vom Benutzer eingegebenen Wertungen an das Basisgerät übertragen werden und vom Basisgerät bei der Auswahl der in der Ordnungsreihenfolge aufgeführten Dateneinheiten berücksichtigt werden. Auf diese Weise wird einerseits ermöglicht, dass die Wertung des individuellen Benutzers bei der Erstellung einer für ihn bestimmten Ordnungsreihenfolge in Zukunft berücksichtigt wird. Weiterhin wird ermöglicht, dass die Wertungen einer Mehrzahl von Benutzern bei der Erstellung von Ordnungsreihenfolgen berücksichtigt werden. Schließlich kann aus den Wertungen einer Vielzahl oder aller Benutzer des erfindungsgemäßen Verfahrens eine Rangliste erstellt werden, in welcher die Dateneinheiten anhand ihrer Wertungen klassifiziert sind, um hieraus beispielsweise die Verweildauer der Dateneinheiten im Basisgerät und in den Benutzergeräten zu bestimmen, den Kaufpreis einzelner Dateneinheiten an die Nachfrage anzupassen oder dergleichen.

Gemäß einer weiteren bevorzugten Ausführungsform werden zwischen dem Benutzergerät und dem Basisgerät die für einen Kauf einer Dateneinheit benötigten Informationen übertragen werden. Das erfindungsgemäße Verfahren eignet sich nicht nur dazu, auf dem Benutzergerät Dateneinheiten zur Wiedergabe bereitzustellen, sondern auch dazu, auf dem Benutzergerät Dateneinheiten zur freien Verwendung durch den Benutzer bereitzustellen. Im letzteren Falle werden dem Benutzer weitergehende Rechte an den Dateneinheiten eingeräumt, so beispielsweise auch die mehrmalige Wiedergabe, die Übertragung auf andere Wiedergabegeräte und dergleichen. Diese Nutzungsrechte werden regelmäßig mit einem Kaufpreis verbunden. Es ist daher bevorzugt, wenn Basisgerät und Benutzergerät die Informationen, die zur Entrichtung eines solchen Kaufpreises und zur entsprechenden Erweiterung der Nutzungsrechte an den Dateneinheiten erforderlich sind, austauschen können. Dabei handelt es sich insbesondere um Informationen, welche die zum Kauf ausgewählte Dateneinheit identifizieren, beispielsweise anhand deren Individualkennung, eine Identifikation des Käufers und gegebenenfalls Informationen betreffend des für die Entrichtung des Kaufpreises zu verwendenden Zahlungsmittels. Insbesondere vorteilhaft bei dieser Fortbildung ist, dass die Dateneinheiten bereits physikalisch auf dem Benutzergerät gespeichert sind und somit lediglich nach der Abwicklung des Kaufs eine entsprechende Freigabe zur weitergehenden Nutzung erfahren müssen.

Es ist weiterhin bevorzugt, wenn der Benutzer eine Dateneinheit mit einer Kaufmarkierung versehen kann und dass, um die entsprechende Dateneinheit dem Benutzer frei zugänglich zu machen, die Kaufmarkierung umgehend zum Basisgerät übertragen wird oder dass diese Kaufmarkierung auf dem Benutzergerät gespeichert wird, bis eine Verbindung zum Basisgerät besteht, und die Kaufmarkierung dann zum Basisgerät übertragen wird, um den Kauf abzuwickeln. Ein Vorteil des erfindungsgemäßen Verfahrens besteht darin, die Bereitstellung der Daten und ihre hieraus mögliche Wiedergabe auf dem Benutzergerät in der Ordnungsreihenfolge unabhängig von einer permanenten Verbindung zum Basisgerät zu ermöglichen. Um auch die Abwicklung des Kaufs einer Dateneinheit unabhängig von einer permanenten Datenverbindung zum Basisgerät zu ermöglichen, ist es vorteilhaft, die Informationen, welche für den Kauf zwischen Basis- und Benutzergerät ausgetauscht werden müssen, im Falle einer bestehenden Datenverbindung umgehend auszutauschen und in dem Fall, dass keine Datenverbindung besteht, eine der zu kaufenden Dateneinheit zugeordneten Kaufmarkierung auf dem Benutzergerät zu speichern und zu einem späteren Zeitpunkt, wenn eine Datenverbindung besteht, die für die Abwicklung des Kaufs benötigten Informationen zwischen Basisgerät und Benutzergerät zu übertragen.

Weiterhin ist es bei den beiden vorgenannten Fortbildungsformen mit Informationsaustausch zur Abwicklung eines Kaufs einer oder mehrerer Dateneinheiten vorteilhaft, sofern die Dateneinheiten gemäß der zuvor beschriebenen Ausführungsform in verschlüsselter Form an das Benutzergerät übertragen werden, wenn die Freigabe der gekauften Dateneinheiten durch Verändern, insbesondere Aufheben der Verschlüsselung der entsprechenden Dateneinheiten erfolgt. Wie zuvor beschrieben, liegt ein Vorteil des erfindungsgemäßen Verfahrens darin, dass die Dateneinheiten bereits physikalisch auf dem Benutzergerät angeordnet sind. Die nach Entrichtung des Kaufpreises zu vollziehende Freigabe der gekauften Dateneinheiten kann daher insbesondere durch Aufheben einer Verschlüsselung dieser Dateneinheiten erfolgen, wodurch die Dateneinheiten dem Benutzer zur weitergehenden Nutzung und für weitergehende Nutzungsarten bereitgestellt werden.

Es ist weiterhin bevorzugt, wenn zwischen einem ersten und einem zweiten Benutzergerät Dateneinheiten, Ordnungsreihenfolge(n) und/oder Zeit-Zuweisungstabelle(n) übertragen werden. Auf diese Weise kann eine Übertragung der Dateneinheiten, Ordnungsreihenfolgen und Zeittabellen, beispielsweise um ein Update eines Benutzergeräts auf eine aktuellere Version zu erzielen, nicht nur dann erfolgen, wenn eine Datenverbindung zum Basisgerät besteht, sondern auch dann, wenn dieses Benutzergerät mit einem anderen Benutzergerät in Datenverbindung steht, das einen aktuelleren Datenbestand aufweist. Dabei kann die Datenübertragung drahtgebunden, aber insbesondere drahtlos erfolgen, beispielsweise über die Bluetooth-Technologie. Auf diese Weise können sogenannte "Mutual Social Updates" zwischen einzelnen Benutzergeräten erfolgen und bei entsprechender Verbreitung der Benutzergeräte eine stets aktuelle Datenversion auf jedem der Benutzergeräte erzielt werden, soweit laufend einzelne dieser Benutzergeräte durch Datenverbindung zum Basisgerät mit einer entsprechend aktuellen Version aktualisiert worden sind.

Weiterhin ist es bevorzugt, das erfindungsgemäße Verfahren dadurch fortzubilden, dass eine erste Anzahl von Dateneinheiten und eine erste Ordnungsreihenfolge mit zu dieser korrespondierender erster Zeit-Zuweisungstabelle übertragen werden, wobei die erste Ordnungsreihenfolge ausschließlich Individualkennungen von Dateneinheiten der ersten Anzahl von Dateneinheiten enthält, und eine zweite Anzahl von Dateneinheiten und eine zweite Ordnungsreihenfolge mit zu dieser korrespondierender zweiter Zeit-Zuweisungstabelle übertragen werden, wobei die zweite Ordnungsreihenfolge Individualkennungen von Dateneinheiten der ersten und zweiten Anzahl von Dateneinheiten enthält. Mit dieser Fortbildung ist es möglich, Benutzergeräte fortlaufend an aktuelle Entwicklungen bezüglich der Dateneinheiten und Ordnungsreihenfolgen anzupassen, indem lediglich die veränderten Dateneinheiten oder neu erschienene Dateneinheiten übertragen werden und Ordnungsreihenfolgen, welche Individualkennungen dieser veränderten oder neu erschienenen Dateneinheiten enthalten, übertragen werden. Die Übertragung kann dabei insbesondere zu zwei unterschiedlichen Zeitpunkten erfolgen. Die Fortbildung ist so zu verstehen, dass ein Benutzergerät fortlaufend zu späteren Zeitpunkten durch Übertragung entsprechender neuer Dateneinheiten und Ordnungsreihenfolgen mit Zeitzuweisungstabellen aktualisiert werden kann. Dabei ist insbesondere auch neben der Speicherung neuer Dateneinheiten und Ordnungsreihenfolgen vorgesehen, dass bestimmte Dateneinheiten, Ordnungsreihenfolgen und Zeitzuweisungstabellen, beispielsweise solche, welche eine bestimmte Verweildauer auf dem Benutzergerät überschritten haben oder solche Dateneinheiten, welche gemäß einer der vorgenannten Ausführungsformen negative oder keine positiven Wertungen erhalten hat, vom Benutzergerät durch eine Löschungsanweisung, die vom Basisgerät auf das Benutzergerät übertragen wird, entfernt werden, um auf diese Weise eine sinnvolle Verwaltung des auf dem Benutzergerät verfügbaren Speicherplatzes zu erzielen.

Es ist weiterhin bevorzugt, wenn Dateneinheiten auf dem Basisgerät bereitgestellt werden und mit einer speziellen Kennung an das Benutzergerät übertragen werden, und dass der Benutzer die Bereitstellung der Dateneinheiten auf dem Benutzergerät so konfigurieren kann, dass ihm Dateneinheiten mit einer speziellen Kennung umgehend nach deren Empfang durch das Benutzergerät anstelle einer oder mehrerer gemäß der Ordnungsreihenfolge vorgesehener Dateneinheiten bereitgestellt werden. Auf diese Weise kann der Benutzer sich bestimmte Dateneinheiten unabhängig von der gerade ablaufenden Ordnungsreihenfolge sofort nach deren Übertragung bereitstellen und wiedergeben lassen. So können beispielsweise Dateneinheiten, welche aktuelle Nachrichteninformationen enthalten, umgehend dem Benutzer wiedergegeben werden. Darüber hinaus kann der Benutzer durch entsprechende Kennungen eine gezielte Auswahl der Dateneinheiten wählen und somit über die Auswahl einer oder mehrerer Kennungen ("tag") nur solche Dateneinheiten sich sofort wiedergeben lassen, welche seine geographische Region, sein Berufsfeld oder dergleichen betreffen.

Dabei kann es insbesondere für bestimmte Anwendungen bevorzugt sein, wenn Dateneinheiten auf dem Basisgerät bereitgestellt werden und mit einer speziellen Dringlichkeits-Kennung an das Benutzergerät übertragen werden, und dass dem Benutzer Dateneinheiten mit dieser speziellen Dringlichkeits-Kennung unabhängig von der individuellen Konfiguration des Benutzergeräts umgehend nach deren Empfang durch das Benutzergerät anstelle einer oder mehrerer gemäß der Ordnungsreihenfolge vorgesehener Dateneinheiten bereitgestellt werden. Auf diese Weise können bestimmte Dateneinheiten, welche allen Benutzern umgehend zur Kenntnis gebracht werden sollen, unabhängig von der individuellen Konfiguration des Benutzergeräts der einzelnen Benutzer sofort unabhängig von der gerade gewählten Ordnungsreihenfolge bereitgestellt und wiedergegeben werden. Dies eignet sich beispielsweise zur umgehenden Verbreitung von aktuellen Warnmeldungen oder Gefahrenhinweisen.

Gemäß einer weiteren bevorzugten Ausführungsform wird jeder Dateneinheit zumindest ein Attribut zugeordnet wird und im Hinweissatz der Dateneinheit abgespeichert und eine Ordnungsanweisung vom Basisgerät an das Benutzergerät übertragen oder vom Benutzer eingegeben, welche das Basisgerät dazu veranlasst, Dateneinheiten mit einem bestimmten Attribut in einer Ordnungsreihenfolge aneinanderzureihen und in dieser Ordnungsreihenfolge dem Benutzer bereitzustellen. Auf diese Weise kann anhand der Ordnungsanweisung aus den Dateneinheiten eine Ordnungsreihenfolge auf dem Benutzergerät selbst erstellt werden, die auf dem Benutzergerät gespeichert sind. So können beispielsweise durch ein solches Attribut Dateneinheiten, welche ein bestimmtes Thema betreffen, oder Audiodaten eines bestimmten Genres, einer bestimmten Geschwindigkeit oder eines bestimmten Interpreten ausgewählt und in einer Ordnungsreihenfolge zusammengestellt werden.

Dabei ist es insbesondere bevorzugt, wenn in dem Hinweissatz einer oder mehrerer Dateneinheiten eine positive oder negative Anordnungsanweisung gespeichert ist, welche Informationen enthält,
- auf welche Dateneinheit diese Dateneinheit in einer Ordnungsreihenfolge folgen muss,
- auf welche Dateneinheit diese Dateneinheit in einer Ordnungsreihenfolge nicht folgen darf,
- welche Dateneinheit dieser Dateneinheit in einer Ordnungsreihenfolge folgen muss, und/oder
- welche Dateneinheit dieser Dateneinheit in einer Ordnungsreihenfolge nicht folgen darf.

Hierdurch kann durch die Attributzuordnung verhindert werden, dass zwei Dateneinheiten in der Ordnungsreihenfolge hintereinander angeordnet werden, welche nicht miteinander harmonieren (negative Attributzuweisung) oder es kann erreicht werden, dass zwei Dateneinheiten, welche miteinander besonders gut harmonieren, stets nacheinander und in einer bestimmten Reihenfolge abgespielt werden (positive Attributzuordnung). Auf diese Weise können sogenannte virtuelle attributbasierte Ordnungsreihenfolgen aus den zur Verfügung stehenden Dateneinheiten oder einer Auswahl daraus erstellt werden.

Weiterhin ist es bevorzugt, wenn eine Vielzahl von Ordnungsreihenfolgen und diesen zugeordneten Zeit-Zuweisungstabellen an das Benutzergerät übertragen und im Benutzergerät gespeichert werden, wobei sich die Ordnungsreihenfolgen hinsichtlich der in ihnen aneinandergereihten Dateneinheiten voneinander unterscheiden und der Benutzer durch Eingabe eines Parameters über eine Benutzerschnittstelle des Benutzergeräts eine bereitzustellende Ordnungsreihenfolge auswählen kann. Auf diese Weise wird dem Benutzer eine Vielfalt an unterschiedlichen Ordnungsreihenfolgen bereitgestellt, aus denen er eine Ordnungsreihenfolge entsprechend seiner aktuellen Bedürfnisse auswählen kann.

Ein weiterer Aspekt der Erfindung ist eine Vorrichtung zur Übertragung und Bereitstellung von Daten gemäß Anspruch 23. Die Vorrichtung eignet sich insbesondere dazu, gemäß des zuvor beschriebenen Verfahrens und seiner Verfahrensfortbildungen betrieben zu werden. Bezüglich der Vorrichtung und der in den Ansprüchen 23-32 aufgeführten Fortbildungen der Vorrichtung wird auf die korrespondierenden, zuvor beschriebenen Fortbildungen des Verfahrens hinsichtlich der Vorteile und Funktionsweise verwiesen.

Ein weiterer Aspekt der Erfindung ist ein Computerprogrammprodukt, welches, wenn es auf einem Basisgerät abläuft, die auf Seite des Basisgeräts für den Ablauf des zuvor beschriebenen Verfahrens erforderlichen Schritte ausführt sowie ein Computerprogrammprodukt, welches, wenn es auf einem Benutzergerät abläuft, die für den Ablauf des zuvor beschriebenen Verfahrens auf Seiten des Benutzergeräts erforderlichen Schritte ausführt. Die entsprechende Programmierung des Basis- und Benutzergeräts kann durch separate Computerprogrammprodukte erfolgen oder es kann ein Computerprogrammprodukt bereitgestellt werden, welches bei Ablaufen auf dem Basisgerät und bei Ablaufen auf dem Benutzergerät die jeweiligen dort für das erfindungsgemäße Verfahren erforderlichen Verfahrensschritte ausführt.

Schließlich ist ein weiterer Aspekt der Erfindung ein Benutzergerät, welches für den Ablauf des erfindungsgemäßen Verfahrens programmiert ist und ein Basisgerät, welches für den Ablauf des erfindungsgemäßen Verfahrens programmiert ist.

Eine bevorzugte Ausführungsform des erfindungsgemäßen Verfahrens wird anhand der anhängenden Figuren erläutert. Es zeigen:
- Figur 1: Eine schematische Darstellung eines konventionellen Übertragungsverfahrens,
- Figur 2: eine schematische Darstellung des eingebetteten Kanals für das erfindungsgemäße Übertragungsverfahren,
- Figur 3: eine schematische Darstellung des erfindungsgemäßen Übertragungsverfahrens, und
- Figur 4: eine schematische Darstellung der Bereitstellung der Daten gemäß des erfindungsgemäßen Verfahrens.

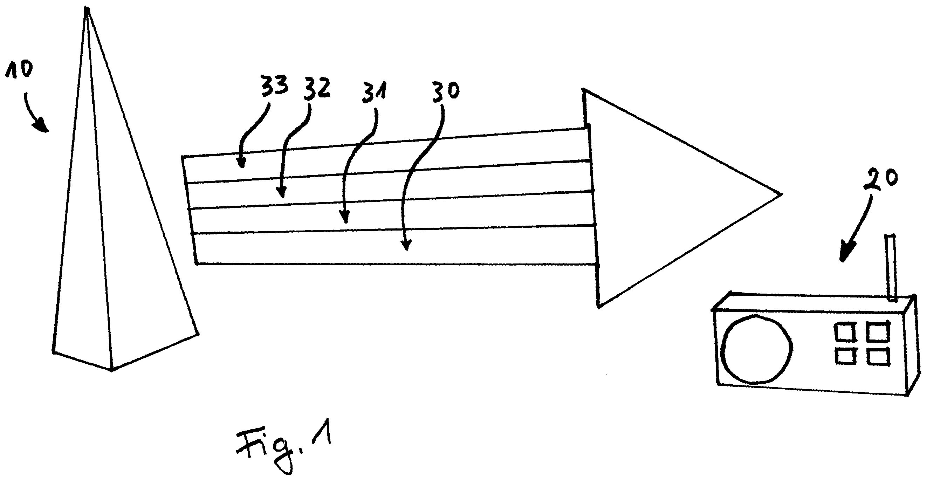

Bezug nehmend zunächst auf Figur 1 ist ein Übertragungsverfahren dargestellt, bei dem zwischen einem Basisgerät 10 und einem Benutzergerät 20 Daten über insgesamt vier Kanäle 30, 31, 32, 33 vom Basisgerät auf das Benutzergerät übertragen werden. Bei den Kanälen 30-33 kann es sich um Multiplexkanäle handeln, die nach dem Zeit- oder Frequenz-Multiplexverfahren arbeiten. Zur Bereitstellung der Daten auf dem Benutzergerät ist eine permanente Verbindung zwischen Basisgerät und Benutzergerät über die Kanäle 30-33 oder zumindest über den aktuell auf dem Benutzergerät bereitgestellten Kanal dieser vier Kanäle erforderlich.

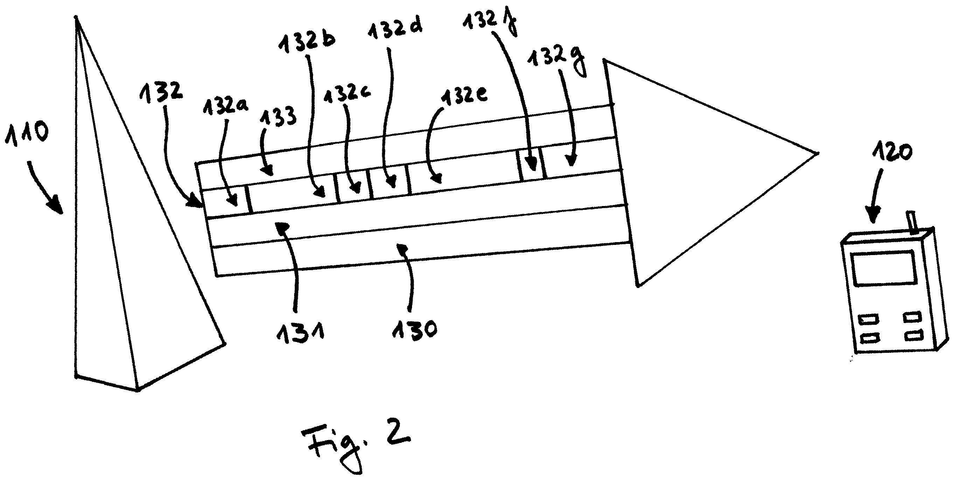

Bei dem in Figur 2 gezeigten Übertragungsverfahren ist in den Übertragungsweg zwischen einem erfindungsgemäßen Basisgerät 110 und einem erfindungsgemäßen Benutzergerät 120 ein erfindungsgemäßer Übertragungskanal 132 in die Übertragungskanäle eingebettet. In dem erfindungsgemäßen Übertragungskanal 132 werden Paketsequenzen in einem Paket-Multiplexverfahren übertragen. Die einzelnen Pakete 132a-g können dabei entweder Pakete mit Dateneinheiten, Pakete mit Ordnungsreihenfolgen oder Zeitzuweisungstabellen darstellen, die für die Bereitstellung der Dateneinheiten auf dem Benutzergerät zu diesem übertragen werden müssen.

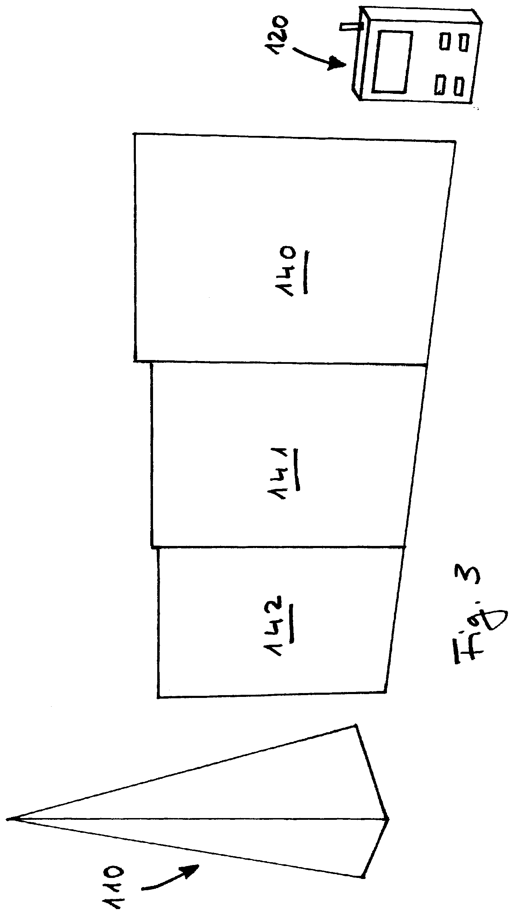

Anhand von Figur 3 kann ein weiterer Aspekt des erfindungsgemäßen Übertragungsverfahrens erläutert werden. Gemäß dieses Aspekts wird zwischen dem Basisgerät 110 und dem Benutzergerät 120 zunächst ein erster Block 140 übertragen, welcher Dateneinheiten, Ordnungsreihenfolgen und Zeitzuweisungstabellen gemäß eines ersten Standes enthält, der zu einem bestimmten Datum den aktuellen Stand darstellt.

Zu einem späteren Zeitpunkt wird zwischen Basisgerät 110 und Benutzergerät 120 ein Updateblock 141 übertragen, welcher Dateneinheiten, Ordnungsreihenfolgen und Zeitzuweisungstabellen enthält, die den Stand wiedergeben, der zu diesem späteren Zeitpunkt den aktuellen Stand darstellt. In diesem Updateblock 141 können des Weiteren Löschungsanweisungen enthalten sein, welche veranlassen, dass auf dem Benutzergerät bestimmte Dateneinheiten, Ordnungsreihenfolgen und Zeitzuweisungstabellen aus dem ersten Block 140 gelöscht werden, beispielsweise um Speicherplatz für die zusätzlich hinzukommenden Daten aus dem Updateblock 141 zu schaffen.

In ähnlicher Weise kann zu einem weiteren späteren Zeitpunkt ein zweiter Updateblock 142 vom Basisgerät an das Benutzergerät gesendet werden, um wiederum eine Aktualisierung der Daten auf dem Benutzergerät und gegebenenfalls Löschung nicht mehr aktueller Daten zu veranlassen.

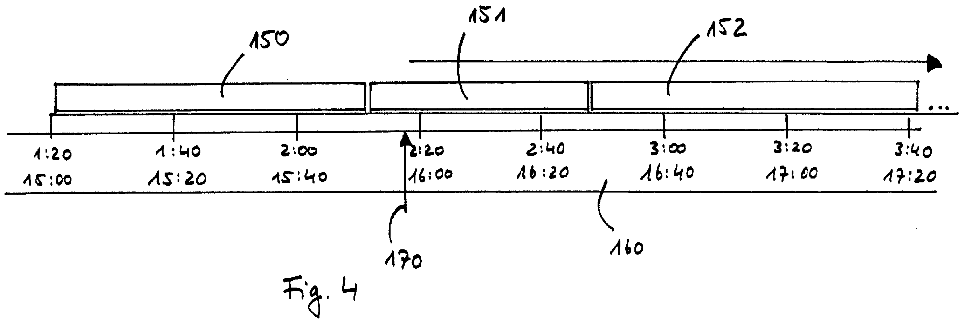

Figur 4 zeigt die zeitdiskrete Bereitstellung der Dateneinheiten auf dem Benutzergerät in schematischer Form. Abgebildet ist ein Ausschnitt von drei Dateneinheiten 150, 151, 152 aus einer Aneinanderreihung mehrerer Dateneinheiten, die durch Individualkennung der einzelnen Dateneinheiten in einer Ordnungsreihenfolge bestimmt sind. Im dargestellten Beispiel sind die drei Dateneinheiten 150, 151, 152 drei Audiodateien, welche jeweils in sich abgeschlossene Musiktitel darstellen, so dass die Ordnungsreihenfolge in diesem Fall einer Playlist der Musiktitel entspricht.

Entlang der Aneinanderreihung der Musiktitel 150-152 ist eine sich von links nach rechts erstreckende Abspielzeitleiste 160 angeordnet, welche Abspielzeiten mit einer sich parallel dazu erstreckenden Tageszeit-Leiste verbindet und folglich jeden Punkt der Abspielzeit einer bestimmten Tageszeit zuweist.

Fordert der Benutzer zu einem bestimmten Tageszeitpunkt die Wiedergabe der Zeit-Zuordnungstabelle an, so wird anhand der Tageszeit die Abspielzeit aus der Zeitzuweisungstabelle ermittelt und die Einsprungstelle in die Wiedergabe bestimmt. Im Fall der Tageszeit 160 ergibt sich somit die mit dem Pfeil 170 in Figur 4 markierte Einsprungstelle, so dass der Musiktitel 151 als aktueller Titel kurz hinter seinem Titelbeginn dem Benutzer wiedergegeben wird und hierauf folgend der Musiktitel 152 wiedergegeben würde. Der Musiktitel 150 ist zum gewählten Tageszeitpunkt bereits abgelaufen und wird dem Benutzer in diesem Fall nicht wiedergegeben.

## Patentansprüche

1. Verfahren zur Übertragung und Bereitstellung von Daten, mit den Schritten:
- Bereitstellung von Dateneinheiten in einem Basis-Hauptdatenspeicher eines Basisgeräts,
- Bereitstellung eines Hinweissatzes zu jeder Dateneinheit, in dem zumindest eine für jede Dateneinheit unterschiedliche Individualkennung enthalten ist,
- Erstellen einer Ordnungsreihenfolge der Dateneinheiten welche eine Folge einer Mehrzahl von Individualkennungen anhand vorbestimmter, von einem Administrator oder von einem Benutzer eingegebener Kriterien bestimmt,
- Erstellen einer Zeit-Zuweisungstabelle zu jeder Ordnungsreihenfolge, wobei in der Zeit-Zuweisungstabelle jedem Ablaufzeitpunkt der in der Ordnungsreihenfolge durch die Individualkennungen bestimmten Folge von Dateneinheiten zumindest eine vorbestimmte Tageszeit, vorzugsweise eine vorbestimmte Tageszeit an einem vorbestimmten Datum und jeder Dateneinheit zumindest eine Tageszeit oder ein Ablaufzeitpunkt in der Zeit-Zuweisungstabelle zugewiesen wird,
- Übertragen mehrerer Dateneinheiten, zumindest einer Ordnungsreihenfolge und der dieser zugeordneten Zeit-Zuweisungstabelle(n) von dem Basisgerät an ein Benutzergerät,
- Speichern der mehreren Dateneinheiten, der zumindest einen Ordnungsreihenfolge und der dieser zugeordneten Zeit-Zuweisungstabelle(n) auf dem Benutzergerät,
- Auslesen einer Tageszeit und ggf. eines Datums aus einer dem Benutzergerät zugeordneten Benutzer-Uhr,
- Bestimmen des der Tageszeit und ggf. dem Datum zugewiesenen Ablaufzeitpunkts anhand der Zeit-Zuweisungstabelle, und
- Bereitstellen der dem Ablaufzeitpunkt zugewiesenen Dateneinheit anhand der Ordnungsreihenfolge.

2. Verfahren nach Anspruch 1,
**dadurch gekennzeichnet, dass** die Dateneinheiten vor Übertragung auf das Benutzergerät solcherart verschlüsselt werden, dass auf sie nur über das Benutzergerät, und zwar nur mittels einer an das Benutzergerät übertragenen Ordnungsreihenfolge zugegriffen werden kann.

3. Verfahren nach Anspruch 1 oder 2,
**dadurch gekennzeichnet, dass** eine Ordnungsreihenfolge und die ihr zugeordnete Zeit-Zuweisungstabelle in einer Ordnungs+Zeit-Zuweisungstabelle zusammengefasst sind.

4. Verfahren nach einem der vorhergehenden Ansprüche,
**dadurch gekennzeichnet, dass** die Dateneinheiten, Ordnungsreihenfolge(n) und Zeit-Zuweisungstabelle(n) drahtlos übertragen werden.

5. Verfahren nach dem vorhergehenden Anspruch,
**dadurch gekennzeichnet, dass** die Dateneinheiten, Ordnungsreihenfolge(n) und/oder Zeit-Zuweisungstabelle(n) als Paket-Multiplex-Signal übertragen werden.

6. Verfahren nach dem vorhergehenden Anspruch,
**dadurch gekennzeichnet, dass** die Dateneinheiten, die Ordnungsreihenfolge(n) und die Zeit-Zuweisungstabelle(n) nacheinander übertragen werden.

7. Verfahren nach einem der vorhergehenden Ansprüche,
**dadurch gekennzeichnet, dass** die Dateneinheiten, Ordnungsreihenfolge(n) und/oder Zeit-Zuweisungstabelle(n) in einem Übertragungszeitraum übertragen werden, der kürzer ist als der Wiedergabezeitraum, den die akustische und/oder graphische Wiedergabe von durch die Dateneinheiten definierten Audio- bzw. Videodaten in Anspruch nimmt.

8. Verfahren nach einem der vorhergehenden Ansprüche,
**dadurch gekennzeichnet, dass** die Zeit-Zuweisungstabelle eine Zuweisung der Startzeiten der Dateneinheiten gemäß der Ordnungsreihenfolge zu den Tageszeiten enthält und der Ablaufzeitpunkt, an dem die Bereitstellung beginnt, durch folgende Schritte ermittelt wird:
- Ermitteln derjenigen Startzeit, welche der von der Benutzeruhr bereitgestellten Uhrzeit nächstliegend vorangeht durch Zuordnen der in der Zeit-Zuweisungstabelle enthaltenen Startzeiten zu der Uhrzeit,
- Ermitteln der dieser Startzeit zugeordneten Dateneinheit anhand der Zeit-Zuweisungstabelle und der Ordnungsreihenfolge,
- Ermitteln der ab der Startzeit abgelaufenen Laufzeit der Dateneinheit zu der von der Benutzeruhr bereitgestellten Uhrzeit durch Subtraktion der Startzeit von der Uhrzeit,
- wobei als Ablaufzeitpunkt ein Zeitpunkt in der Ordnungsreihenfolge zugeordnet wird, welcher der abgelaufenen Laufzeit entspricht.

9. Verfahren nach einem der vorhergehenden Ansprüche 1-7,
**dadurch gekennzeichnet, dass** die Zeit-Zuweisungstabelle eine Zuweisung der Startzeiten der Dateneinheiten gemäß der Ordnungsreihenfolge zu den Tageszeiten enthält und der Ablaufzeitpunkt, an dem die Bereitstellung beginnt, durch folgende Schritte ermittelt wird:
- Ermitteln derjenigen Startzeit, welche der von der Benutzeruhr bereitgestellten Uhrzeit nächstliegend ist durch Zuordnen der in der Zeit-Zuweisungstabelle enthaltenen Startzeiten zu der Uhrzeit,
- Ermitteln der dieser Startzeit zugeordneten Dateneinheit anhand der Zeit-Zuweisungstabelle und der Ordnungsreihenfolge,
- Bereitstellen dieser Dateneinheit ab ihrer Startzeit in der Ordnungsreihenfolge.

10. Verfahren nach dem vorhergehenden Anspruch,
**dadurch gekennzeichnet, dass** diejenige Startzeit ermittelt wird, welche der von der Benutzeruhr bereitgestellten Uhrzeit nächstliegend vorangeht.

11. Verfahren nach einem der vorhergehenden Ansprüche,
**dadurch gekennzeichnet, dass** vom Benutzer über eine Benutzerschnittstelle des Benutzergeräts eingegebene Wertungen logisch mit einer Dateneinheit einer Individualkennung, der Ordnungsreihenfolge und/oder einem Zeitpunkt der Zeit-Zuweisungstabelle verknüpft werden und die Ordnungsreihenfolge in Abhängigkeit dieser Wertungen verändert wird.

12. Verfahren nach dem vorhergehenden Anspruch,
**dadurch gekennzeichnet, dass** die vom Benutzer eingegebenen Wertungen an das Basisgerät übertragen werden und vom Basisgerät bei der Auswahl der in der Ordnungsreihenfolge aufgeführten Dateneinheiten berücksichtigt werden.

13. Verfahren nach einem der vorhergehenden Ansprüche,
**dadurch gekennzeichnet, dass** zwischen dem Benutzergerät und dem Basisgerät die für einen Kauf einer Dateneinheit benötigten Informationen übertragen werden.

14. Verfahren nach einem der vorhergehenden Ansprüche,
**dadurch gekennzeichnet, dass** der Benutzer eine Dateneinheit mit einer Kaufmarkierung versehen kann und dass, um die entsprechende Dateneinheit dem Benutzer frei zugänglich zu machen, die Kaufmarkierung umgehend zum Basisgerät übertragen wird oder dass diese Kaufmarkierung auf dem Benutzergerät gespeichert wird, bis eine Verbindung zum Basisgerät besteht, und die Kaufmarkierung dann zum Basisgerät übertragen wird, um den Kauf abzuwickeln.

15. Verfahren nach einem der beiden vorhergehenden Ansprüche und Anspruch 2,
**dadurch gekennzeichnet, dass** die Freigabe der gekauften Dateneinheiten durch Verändern, insbesondere Aufheben der Verschlüsselung der entsprechenden Dateneinheiten erfolgt.

16. Verfahren nach einem der vorhergehenden Ansprüche,
**dadurch gekennzeichnet, dass** zwischen einem ersten und einem zweiten Benutzergerät Dateneinheiten, Ordnungsreihenfolge(n) und/oder Zeit-Zuweisungstabelle(n) übertragen werden.

17. Verfahren nach einem der vorhergehenden Ansprüche,
**dadurch gekennzeichnet, dass**
- eine erste Anzahl von Dateneinheiten und eine erste Ordnungsreihenfolge mit zu dieser korrespondierender erster Zeit-Zuweisungstabelle übertragen werden, wobei die erste Ordnungsreihenfolge ausschließlich Individualkennungen von Dateneinheiten der ersten Anzahl von Dateneinheiten enthält, und
- eine zweite Anzahl von Dateneinheiten und eine zweite Ordnungsreihenfolge mit zu dieser korrespondierender zweiter Zeit-Zuweisungstabelle übertragen werden, wobei die zweite Ordnungsreihenfolge Individualkennungen von Dateneinheiten der ersten und zweiten Anzahl von Dateneinheiten enthält.

18. Verfahren nach einem der vorhergehenden Ansprüche,
**dadurch gekennzeichnet, dass** Dateneinheiten auf dem Basisgerät bereitgestellt werden und mit einer speziellen Kennung an das Benutzergerät übertragen werden, und dass der Benutzer die Bereitstellung der Dateneinheiten auf dem Benutzergerät so konfigurieren kann, dass ihm Dateneinheiten mit einer speziellen Kennung umgehend nach deren Empfang durch das Benutzergerät anstelle einer oder mehrerer gemäß der Ordnungsreihenfolge vorgesehener Dateneinheiten bereitgestellt werden.

19. Verfahren nach einem der vorhergehenden Ansprüche,
**dadurch gekennzeichnet, dass** Dateneinheiten auf dem Basisgerät bereitgestellt werden und mit einer speziellen Dringlichkeits-Kennung an das Benutzergerät übertragen werden, und dass dem Benutzer Dateneinheiten mit dieser speziellen Dringlichkeits-Kennung unabhängig von der individuellen Konfiguration des Benutzergeräts umgehend nach deren Empfang durch das Benutzergerät anstelle einer oder mehrerer gemäß der Ordnungsreihenfolge vorgesehener Dateneinheiten bereitgestellt werden.

20. Verfahren nach einem der vorhergehenden Ansprüche,
**dadurch gekennzeichnet, dass** jeder Dateneinheit zumindest ein Attribut zugeordnet wird und im Hinweissatz der Dateneinheit abgespeichert wird und dass eine Ordnungsanweisung vom Basisgerät an das Benutzergerät übertragen wird oder vom Benutzer eingegeben wird, welche das Basisgerät dazu veranlasst, Dateneinheiten mit einem bestimmten Attribut in einer Ordnungsreihenfolge aneinanderzureihen und in dieser Ordnungsreihenfolge dem Benutzer bereitzustellen.

21. Verfahren nach dem vorhergehenden Anspruch,
**dadurch gekennzeichnet, dass** in dem Hinweissatz einer oder mehrerer Dateneinheiten eine positive oder negative Anordnungsanweisung gespeichert ist, welche Informationen enthält,
- auf welche Dateneinheit diese Dateneinheit in einer Ordnungsreihenfolge folgen muss,
- auf welche Dateneinheit diese Dateneinheit in einer Ordnungsreihenfolge nicht folgen darf,
- welche Dateneinheit dieser Dateneinheit in einer Ordnungsreihenfolge folgen muss, und/oder
- welche Dateneinheit dieser Dateneinheit in einer Ordnungsreihenfolge nicht folgen darf.

22. Verfahren nach einem der vorhergehenden Ansprüche,
**dadurch gekennzeichnet, dass** eine Vielzahl von Ordnungsreihenfolgen und diesen zugeordneten Zeit-Zuweisungstabellen an das Benutzergerät übertragen werden und im Benutzergerät gespeichert werden, wobei sich die Ordnungsreihenfolgen hinsichtlich der in ihnen aneinandergereihten Dateneinheiten voneinander unterscheiden und der Benutzer durch Eingabe eines Parameters über eine Benutzerschnittstelle des Benutzergeräts eine bereitzustellende Ordnungsreihenfolge auswählen kann.

23. System zur Übertragung und Bereitstellung von Daten, umfassend
- ein Basisgerät mit
a. einem ersten Basis-Speicherplatz, welcher der Speicherung von Dateneinheiten zugewiesen ist, und
b. einem zweiten Basis-Speicherplatz, welcher der Speicherung von zumindest einer Ordnungsreihenfolge und einer dieser zugeordneten Zeit-Zuweisungstabelle einer Mehrzahl von Dateneinheiten zugeordnet ist,
c. einer mit den Basis-Speicherplätzen zusammenwirkenden Datenverwaltungseinheit, welche ausgebildet ist,
i. um anhand vorbestimmter oder von einem Benutzer eingegebener Kriterien zumindest eine Ordnungsreihenfolge zu erstellen, welche eine zeitliche Reihenfolge einer Mehrzahl der Dateneinheiten bestimmt, und
ii. um zu jeder Ordnungsreihenfolge eine Zeit-Zuweisungstabelle zu erstellen, in welcher jedem Ablaufzeitpunkt in der Ordnungsreihenfolge zumindest eine vorbestimmte Tageszeit, vorzugsweise eine vorbestimmte Tageszeit an einem vorbestimmten Datum und jeder Dateneinheit zumindest eine Tageszeit oder ein Ablaufzeitpunkt in der Zeit-Zuweisungstabelle zugewiesen ist,
- eine Daten-Übertragungsvorrichtung zur Übertragung mehrerer Dateneinheiten, zumindest einer Ordnungsreihenfolge und der dieser zugeordneten Zeit-Zuweisungstabelle(n) von dem Basisgerät an ein Benutzergerät,
- mindestens ein Benutzergerät mit
a. einem ersten Benutzer-Speicherplatz, welcher der Speicherung der vom Basisgerät empfangenen Dateneinheiten zugewiesen ist, und
b. einem zweiten Benutzer-Speicherplatz, welcher der Speicherung von zumindest einer Ordnungsreihenfolge und einer dieser zugeordneten Zeit-Zuweisungstabelle einer Mehrzahl von Dateneinheiten zugeordnet ist,
c. einer Benutzer-Uhr, und
d. einer Benutzer-Datenverwaltungseinheit, die ausgebildet ist, um anhand der von der Benutzer-Uhr angegebenen Tageszeit den in der vom Basisgerät empfangenen Zeit-Zuweisungstabelle zugewiesenen Ablaufzeitpunkt der entsprechenden Ordnungsreihenfolge zu bestimmen und anhand der Ordnungsreihenfolge auf die diesem Ablaufzeitpunkt zugewiesene Dateneinheit zugreift und sie dem Benutzer bereitstellt.

24. System nach Anspruch 23, **gekennzeichnet durch** eine Verschlüsselungseinheit, die ausgebildet ist, um die Dateneinheiten vor Übertragung auf das Benutzergerät solcherart zu verschlüsseln, dass auf sie nur über das Benutzergerät, und zwar nur mittels einer an das Benutzergerät übertragenen Ordnungsreihenfolge zugegriffen werden kann.

25. System nach Anspruch 23 oder 24, **dadurch gekennzeichnet, dass** die Datenübertragungsvorrichtung einen mit dem Basisgerät verbundenen Sender enthält, der über eine Funkstrecke die zu übertragenen Dateneinheiten, Ordnungsreihenfolge(n) und Zeit-Zuweisungstabelle(n) drahtlos an einen mit dem Benutzergerät verbundenen Empfänger überträgt.

26. System nach einem der vorhergehenden Ansprüche 23-25, **dadurch gekennzeichnet, dass** die Datenübertragungsvorrichtung ausgebildet ist, um die Dateneinheiten, Ordnungsreihenfolge(n) und/oder Zeit-Zuweisungstabelle(n) als aufeinanderfolgende Pakete über einen Paket-Multiplex-Kanal zu übertragen.

27. System nach einem der vorhergehenden Ansprüche 23-26, **dadurch gekennzeichnet, dass** die Datenübertragungsvorrichtung ausgebildet ist, um die Dateneinheiten, Ordnungsreihenfolge(n) und/oder Zeit-Zuweisungstabelle(n) in einem Übertragungszeitraum zu übertragen, der kürzer ist als der Wiedergabezeitraum, den die akustische und/oder graphische Wiedergabe von durch die Dateneinheiten definierten Audio- bzw. Videodaten in Anspruch nimmt.

28. System nach einem der vorhergehenden Ansprüche 23-27, **dadurch gekennzeichnet, dass** das Benutzergerät eine Benutzerschnittstelle zum Empfang vom Benutzer eingegebener Informationen hat und die Benutzer-Datenverwaltungseinheit ausgebildet ist, um die vom Benutzer eingegebenen Informationen logisch mit den Dateneinheiten, der Ordnungsreihenfolge und/oder der Zeit-Zuweisungstabelle zu verknüpfen und die Ordnungsreihenfolge zu verändern.

29. System nach einem der vorhergehenden Ansprüche 23-28, **gekennzeichnet durch** eine zweite Datenübertragungsvorrichtung zur Übertragung von Daten vom Benutzergerät zum Basisgerät und weiterhin **dadurch gekennzeichnet, dass** das Benutzergerät eine Benutzerschnittstelle zum Empfang vom Benutzer eingegebener Informationen hat, und die zweite Datenübertragungsvorrichtung ausgebildet ist, um die vom Benutzer eingegebene Information an das Basisgerät zu übertragen.

30. System nach einem der vorhergehenden Ansprüche 23-29, **gekennzeichnet durch** eine zweite Datenübertragungsvorrichtung zur Übertragung von Daten vom Benutzergerät zum Basisgerät und weiterhin **dadurch gekennzeichnet, dass** das Benutzergerät eine Benutzerschnittstelle zum Empfang vom Benutzer eingegebener Informationen hat und die Benutzer-Datenverwaltungseinheit ausgebildet ist, um die vom Benutzer eingegebenen Information logisch mit einer Dateneinheit, einer Position der Ordnungsreihenfolge und/oder einer Tages- oder Ablaufzeit zu verknüpfen und die zweite Datenübertragungsvorrichtung ausgebildet ist, um die vom Benutzer eingegebene Information sowie eine Identifizierung der mit der Information verknüpften Dateneinheit, einer Position der Ordnungsreihenfolge und/oder einer Tages- oder Ablaufzeit an das Basisgerät zu übertragen.

31. System nach einem der vorhergehenden Ansprüche 23-30, **dadurch gekennzeichnet, dass** das Benutzergerät und das Basisgerät ausgebildet sind, um die für einen Kauf einer Dateneinheit benötigten Informationen auszutauschen.

32. System nach einem der vorhergehenden Ansprüche 23-31, **gekennzeichnet durch** mehrere Benutzergeräte, wobei jedes Benutzergerät eine Sende- und Empfangsschnittstelle aufweist, um zu einem anderen Benutzergerät Dateneinheiten, Ordnungsreihenfolge(n) und/oder Zeit-Zuweisungstabelle(n) zu übertragen.

33. Computerprogrammprodukt, welches, wenn es auf einem Benutzergerät abläuft, die auf Seite des Benutzergeräts für den Ablauf des Verfahrens nach einem der vorherigen Ansprüche 1-22 erforderlichen Schritte ausführt.

34. Computerprogrammprodukt, welches, wenn es auf einem Basisgerät abläuft, die auf Seite des Basisgeräts für den Ablauf des Verfahrens nach einem der vorherigen Ansprüche 1-22 erforderlichen Schritte ausführt.

35. Benutzergerät, welches für die für den Ablauf des Verfahrens nach einem der vorherigen Ansprüche 1-22 auf Seiten des Benutzergeräts erforderlichen Schritte programmiert ist.

36. Basisgerät, welches für die für den Ablauf des Verfahrens nach einem der vorherigen Ansprüche 1-22 auf Seiten des Basisgeräts erforderlichen Schritte programmiert ist.

## Claims

1. Method for transmitting and providing data, having the steps:
- providing data units in a base main data memory of a base apparatus,
- providing a reference set for each data unit, in which is contained at least one individual identification different for each data unit,
- creating an order sequence of the data units which determines a sequence of a plurality of individual identifications using predetermined criteria input by an administrator or by a user,
- creating a time allocation table for each order sequence, wherein in the time allocation table each expiry time of the sequence, determined in the order sequence by the individual identifications, of data units is allocated at least one predetermined time of day, preferably a predetermined time of day on a predetermined date and each data unit is allocated at least one time of day or an expiry time in the time allocation table,
- transmitting a plurality of data units, at least one order sequence and the time allocation table(s) assigned to it from the base apparatus to a user apparatus,
- storing the plurality of data units, the at least one order sequence and the time allocation table(s) assigned to it on the user apparatus,
- reading a time of day and, possibly a date from a user clock assigned to the user apparatus,
- determining the expiry time allocated to the time of day and possibly to the date using the time allocation table, and
- providing the data unit allocated to the expiry time using the order sequence.

2. Method according to claim 1, **characterised in that** the data units are encrypted prior to transmission to the user apparatus in such a manner that they can only be accessed via the user apparatus and only by means of an order sequence transmitted to the user apparatus.

3. Method according to claim 1 or 2, **characterised in that** an order sequence and the time allocation table assigned to it are combined into one order + time allocation table.

4. Method according to any one of the preceding claims, **characterised in that** the data units, order sequence(s) and time allocation table(s) are transmitted wirelessly.

5. Method according to the preceding claim, **characterised in that** the data units, order sequence(s) and/or time allocation table(s) are transmitted as a packet multiplex signal.

6. Method according to the preceding claim, **characterised in that** the data units, the order sequence(s) and the time allocation table(s) are transmitted consecutively.

7. Method according to any one of the preceding claims, **characterised in that** the data units, order sequence(s) and/or time allocation table(s) are transmitted in a transmission period, which is shorter than the playback period used by the acoustic and/or graphic playback of audio or video data defined by the data units.

8. Method according to any one of the preceding claims, **characterised in that** the time allocation table contains an allocation of the start times of the data units according to the order sequence at the times of day and the expiry time, at which the provision begins, is determined by the following steps:
- determining the start time which most closely precedes the clock time provided by the user clock by assigning the start times contained in the time allocation table to the clock time,
- determining the data unit assigned to this start time using the time allocation table and the order sequence,
- determining the run time of the data unit, which has expired from the start time, at the clock time provided by the user clock, by subtracting the start time from the clock time,
- wherein as the expiry time a time is assigned in the order sequence which corresponds to the expired run time.

9. Method according to any one of the preceding claims 1 to 7, **characterised in that** the time allocation table contains an allocation of the start times of the data units according to the order sequence at the times of day and the expiry time, at which the provision begins, is determined by the following steps:
- determining the start time, which is closest to the clock time provided by the user clock, by assigning the start times contained in the time allocation table to the clock time,
- determining the data unit assigned to this start time using the time allocation table and the order sequence,
- providing this data unit from its start time in the order sequence.

10. Method according to the preceding claim, **characterised in that** the start time is determined which most closely precedes the clock time provided by the user clock.

11. Method according to any one of the preceding claims, **characterised in that** evaluations input by the user via a user interface of the user apparatus are logically linked with a data unit of an individual identification, the order sequence and/or a time of the time allocation table and the order sequence is changed depending on these evaluations.

12. Method according to the preceding claim, **characterised in that** the evaluations input by the user are transmitted to the base apparatus and are taken into account by the base apparatus when selecting the data units listed in the order sequence.

13. Method according to any one of the preceding claims, **characterised in that** the information required for a purchase of a data unit is transmitted between the user apparatus and the base apparatus.

14. Method according to any one of the preceding claims, **characterised in that** the user can provide a data unit with a purchase label and **in that** in order to make the corresponding data unit freely accessible to the user, the purchase label is transmitted immediately to the base apparatus or **in that** this purchase label is stored on the user apparatus until there is a connection to the base apparatus and the purchase label is then transmitted to the base apparatus in order to process the purchase.

15. Method according to any one of the two preceding claims and claim 2, **characterised in that** the release of the purchased data units is carried out by changing, in particular removing the encryption of the corresponding data units.

16. Method according to any one of the preceding claims, **characterised in that** data units, order sequence(s) and/or time allocation table(s) are transmitted between a first and a second user apparatus.

17. Method according to any one of the preceding claims, **characterised in that**
- a first number of data units and a first order sequence are transmitted to this corresponding first time allocation table, wherein the first order sequence contains exclusively individual identifications of data units of the first number of data units, and
- a second number of data units and a second order sequence are transmitted to this corresponding second time allocation table, wherein the second order sequence contains individual identifications of data units of the first and second number of data units.

18. Method according to any one of the preceding claims, **characterised in that** the data units are provided on the base apparatus and are transmitted with a special identification to the user apparatus and **in that** the user can configure the provision of the data units on the user apparatus such that data units with a special identification are provided to it immediately after their receipt by the user apparatus instead of one or a plurality of data units provided according to the order sequence.

19. Method according to any one of the preceding claims, **characterised in that** data units are provided on the base apparatus and are transmitted with a special urgency identification to the user apparatus and **in that** data units with this special urgency identification are provided to the user irrespective of the individual configuration of the user apparatus immediately after their receipt by the user apparatus instead of one or a plurality of data units provided according to the order sequence.

20. Method according to any one of the preceding claims, **characterised in that** at least one attribute is assigned to each data unit and is stored in the reference set of the data unit and **in that** an order instruction is transmitted from the base apparatus to the user apparatus or is input by the user, which prompts the base apparatus to string together data units with a determined attribute in an order sequence and to provide them to the user in this order sequence.

21. Method according to the preceding claim, **characterised in that** a positive or negative arrangement instruction is stored in the reference set of one or a plurality of data units, which contains information,
- on which data unit this data unit must follow in an order sequence,
- on which data unit this data unit may not follow in an order sequence,
- which data unit must follow this data unit in an order sequence and/or
- which data unit may not follow this data unit in an order sequence.

22. Method according to any one of the preceding claims, **characterised in that** a plurality of order sequences and time allocation tables assigned to them are transmitted to the user apparatus and are stored in the user apparatus, wherein the order sequences differ from one another with respect to the data units strung together in them and the user can select an order sequence to be provided by inputting a parameter via a user interface of the user apparatus.

23. System for transmitting and providing data, comprising a base apparatus with
a. a first base memory space, which is allocated to the storage of data units, and
b. a second base memory space, which is assigned to the storage of at least one order sequence and a time allocation table, assigned to it, of a plurality of data units,
c. a data management unit cooperating with the base memory spaces, which is designed
i. to create at least one order sequence using predetermined criteria or criteria input by a user, said order sequence determines a time sequence of a plurality of data units, and
ii. to create a time allocation table for each order sequence, in which each expiry time in the order sequence is allocated at least one predetermined time of day, preferably a predetermined time of day on a predetermined date and each data unit is allocated at least one time of day or an expiry time in the time allocation table.
- a data transmission device for transmitting a plurality of data units, at least one order sequence and the time allocation table(s) assigned to it from the base apparatus to a user apparatus, at least one user apparatus having
a. a first user memory space, which is allocated to the storage of the data units received by the base apparatus and
b. a second user memory space, which is assigned to the storage of at least one order sequence and a time allocation table, assigned to it, of a plurality of data units,
c. a user clock, and
d. a user data management unit which is designed in order to determine the expiry time of the corresponding order sequence allocated in the time allocation table received by the base apparatus using the time of day indicated by the user clock and accesses the data unit allocated to this expiry time using the order sequence and provides it to the user.

24. System according to claim 23, **characterised by** an encryption unit which is designed to encrypt the data units prior to transmission to the user apparatus in such a manner that they can only be accessed via the user apparatus and only by means of an order sequence transmitted to the user apparatus.

25. System according to claim 23 or 24, **characterised in that** the data transmission device contains a transmitter connected to the base apparatus, which transmits the data units, order sequence(s) and time allocation table(s) to be transmitted wirelessly via a transmission path to a receiver connected to the user apparatus.

26. System according to any one of the preceding claims 23 to 25, **characterised in that** the data transmission device is designed to transmit the data units, order sequence(s) and/or time allocation table(s) as consecutive packets via a packet multiplex channel.

27. System according to any one of the preceding claims 23 to 26, **characterised in that** the data transmission device is designed to transmit the data units, order sequence(s) and/or time allocation table(s) in a transmission period which is shorter than the playback period used by the acoustic and/or graphic playback of audio or video data defined by the data units.

28. System according to any one of the preceding claims 23 to 27, **characterised in that** the user apparatus has a user interface for receiving information input by the user and the user data management unit is designed to logically link the information input by the user with the data units, the order sequence and/or the time allocation table and change the order sequence.

29. System according to any one of the preceding claims 23 to 28, **characterised by** a second data transmission device for transmitting data from the user apparatus to the base apparatus and further **characterised in that** the user apparatus has a user interface for receiving information input by the user and the second data transmission device is designed to transmit the information input by the user to the base apparatus.

30. System according to any one of the preceding claims 23 to 29, **characterised by** a second data transmission device for transmitting data from the user apparatus to the base apparatus and further **characterised in that** the user apparatus has a user interface for receiving information input by the user and the user data management unit is designed to logically link the information input by the user with a data unit, a position of the order sequence and/or a time of day or expiry time and the second data transmission device is designed to transmit the information input by the user and an identification of the data unit linked with the information, a position of the order sequence and/or a time of day or expiry time to the base apparatus.

31. System according to any one of the preceding claims 23 to 30, **characterised in that** the user apparatus and the base apparatus are designed to exchange the information required for a purchase of a data unit.

32. System according to any one of the preceding claims 23 to 31, **characterised by** a plurality of user apparatuses, wherein each user apparatus has a transmitting and receiving interface in order to transmit data units, order sequence(s) and/or time allocation table(s) to another user apparatus.

33. Computer program product, which, when it runs on a user apparatus, performs the steps required on the user apparatus for the execution of the method according to any one of the preceding claims 1 to 22.

34. Computer program product, which, when it runs on a base apparatus, performs the steps required on the base apparatus for the execution of the method according to any one of the preceding claims 1 to 22.

35. User apparatus, which is programmed for the steps required for the execution of the method according to any one of the preceding claims 1 to 22 on the user apparatus.

36. Base apparatus, which is programmed for the steps required for the execution of the method according to any one of the preceding claims 1 to 22 on the base apparatus.

## Revendications

1. Procédé de transmission et de préparation de données avec les étapes :
- la préparation d'unités de données dans une mémoire de données principale de base d'un appareil de base,
- la préparation d'un ensemble d'indications pour chaque unité de données, dans lequel est contenu au moins un identifiant individuel différent pour chaque unité de données,
- la création d'une séquence ordonnée des unités de données qui détermine une suite d'une pluralité d'identifiants individuels à l'aide de critères prédéterminés, entrés par un administrateur ou par un utilisateur,
- la création d'une table d'attribution de temps pour chaque séquence ordonnée, dans lequel, dans la table d'attribution de temps, à chaque instant de déroulement de la suite d'unités de données déterminée dans la séquence ordonnée par les identifiants individuels est attribuée au moins une heure du jour prédéterminée, de préférence une heure du jour prédéterminée à une date prédéterminée et à chaque unité de données est attribuée au moins une heure du jour ou un instant de déroulement dans la table d'attribution de temps,
- la transmission de plusieurs unités de données, d'au moins une séquence ordonnée et de la ou des tables d'attribution de temps affectées à celle-ci, de l'appareil de base à un équipement d'utilisateur,
- le stockage des plusieurs unités de données, de l'au moins une séquence ordonnée et de la ou des tables d'attribution de temps affectées à celle-ci sur l'équipement d'utilisateur,
- la lecture d'une heure du jour et, le cas échéant, d'une date à partir d'une horloge d'utilisateur affectée à l'équipement d'utilisateur,
- la détermination de l'instant de déroulement attribué à l'heure du jour et, le cas échéant, à la date à l'aide de la table d'attribution de temps, et
- la préparation de l'unité de données attribuée à l'instant de déroulement à l'aide de la séquence ordonnée.

2. Procédé selon la revendication 1,
**caractérisé en ce que** les unités de données sont chiffrées avant la transmission sur l'équipement d'utilisateur d'une manière telle qu'il est possible d'y accéder uniquement par le biais de l'équipement d'utilisateur et, à savoir, uniquement au moyen d'une séquence ordonnée transmise à l'équipement d'utilisateur.

3. Procédé selon la revendication 1 ou 2,
**caractérisé en ce qu'**une séquence ordonnée et la table d'attribution de temps affectée à celle-ci sont regroupées dans une table d'attribution de temps et d'ordres.

4. Procédé selon l'une quelconque des revendications précédentes,
**caractérisé en ce que** les unités de données, une ou des séquences ordonnées et une ou des tables d'attribution de temps sont transmises sans fil.

5. Procédé selon la revendication précédente,
**caractérisé en ce que** les unités de données, une ou des séquences ordonnées et/ou une ou des tables d'attribution de temps sont transmises en tant que signal multiplex de paquets.

6. Procédé selon la revendication précédente,
**caractérisé en ce que** les unités de données, la ou les séquences ordonnées et la ou les tables d'attribution de temps sont transmises les unes après les autres.

7. Procédé selon l'une quelconque des revendications précédentes,
**caractérisé en ce que** les unités de données, une ou des séquences ordonnées et/ou une ou des tables d'attribution de temps sont transmises dans une période de transmission qui est plus courte que la période de rendu que dure le rendu acoustique et/ou graphique des données audio ou vidéo définies par les unités de données.

8. Procédé selon l'une quelconque des revendications précédentes,
**caractérisé en ce que** la table d'attribution de temps contient une attribution des temps de démarrage des unités de données selon la séquence ordonnée aux heures du jour et l'instant de déroulement, auquel la préparation commence, est établi par des étapes suivantes :
- l'établissement du temps de démarrage, qui précède de la manière la plus proche l'heure préparée par l'horloge d'utilisateur par l'affectation des temps de démarrage, contenus dans la table d'attribution de temps, à l'heure,
- l'établissement de l'unité de données affectée à ce temps de démarrage à l'aide de la table d'attribution de temps et de la séquence ordonnée,
- l'établissement du temps d'exécution de l'unité de données écoulé depuis le temps de démarrage par rapport à l'heure préparée par l'horloge d'utilisateur en soustrayant le temps de démarrage de l'heure,
- dans lequel, en tant qu'instant de déroulement est affecté à un instant dans la séquence ordonnée qui correspond au temps d'exécution écoulé.

9. Procédé selon l'une quelconque des revendications précédentes 1 à 7,
**caractérisé en ce que** la table d'attribution de temps contient une attribution des temps de démarrage des unités de données selon la séquence ordonnée aux heures du jour et l'instant de déroulement, auquel la préparation commence, est établi par des étapes suivantes :
- l'établissement du temps de démarrage qui est le plus proche de l'heure préparée par l'horloge d'utilisateur par l'affectation des temps de démarrage, contenus dans la table d'attribution de temps, à l'heure,
- l'établissement de l'unité de données affectée à ce temps de démarrage à l'aide de la table d'attribution de temps et de la séquence ordonnée,
- la préparation de cette unité de données à partir de son temps de démarrage dans la séquence ordonnée.

10. Procédé selon la revendication précédente,
**caractérisé en ce qu'**il est établi le temps de démarrage qui précède de la manière la plus proche l'heure préparée par l'horloge d'utilisateur.

11. Procédé selon l'une quelconque des revendications précédentes,
**caractérisé en ce que** des évaluations entrées par l'utilisateur par le biais d'une interface utilisateur de l'équipement d'utilisateur sont reliées logiquement à une unité de données d'un identifiant individuel, à la séquence ordonnée et/ou à un instant de la table d'attribution de temps, et la séquence ordonnée est modifiée en fonction de ces évaluations.

12. Procédé selon la revendication précédente,
**caractérisé en ce que** les évaluations entrées par l'utilisateur sont transmises à l'appareil de base et sont prises en compte par l'appareil de base lors de la sélection des unités de données mentionnées dans la séquence ordonnée.

13. Procédé selon l'une quelconque des revendications précédentes,
**caractérisé en ce que**, entre l'équipement d'utilisateur et l'appareil de base, sont transmises les informations nécessaires à un achat d'une unité de données.

14. Procédé selon l'une quelconque des revendications précédentes,
**caractérisé en ce que** l'utilisateur peut doter une unité de données d'un repère d'achat et **en ce que**, pour rendre l'unité de données correspondante librement accessible à l'utilisateur, le repère d'achat est transmis immédiatement à l'appareil de base ou **en ce que** ce repère d'achat est stocké sur l'équipement d'utilisateur jusqu'à ce qu'une liaison à l'appareil de base soit présente, et le repère d'achat est ensuite transmis à l'appareil de base pour réaliser l'achat.

15. Procédé selon l'une des deux revendications précédentes et la revendication 2,
**caractérisé en ce que** la libération des unités de données achetées est effectuée par la modification, en particulier par la suppression du chiffrement des unités de données correspondantes.

16. Procédé selon l'une quelconque des revendications précédentes,
**caractérisé en ce que**, entre un premier et un second équipement d'utilisateur, sont transmises des unités de données, une ou des séquences ordonnées et/ou une ou des tables d'attribution de temps.

17. Procédé selon l'une quelconque des revendications précédentes,
**caractérisé en ce que**
- une première quantité d'unités de données et une première séquence ordonnée sont transmises avec une première table d'attribution de temps correspondant à celle-ci, dans lequel la première séquence ordonnée contient exclusivement des identifiants individuels d'unités de données de la première quantité d'unités de données, et
- une seconde quantité d'unités de données et une seconde séquence ordonnée sont transmises avec une seconde table d'attribution de temps correspondant à celle-ci, dans lequel la seconde séquence ordonnée contient des identifiants individuels d'unités de données des première et seconde quantités d'unités de données.

18. Procédé selon l'une quelconque des revendications précédentes,
**caractérisé en ce que** des unités de données sont préparées sur l'appareil de base et sont transmises avec un identifiant spécial à l'équipement d'utilisateur, et **en ce que** l'utilisateur peut configurer la préparation des unités de données sur l'équipement d'utilisateur de sorte que des unités de données avec un identifiant spécial sont préparées pour lui immédiatement après leur réception par l'équipement d'utilisateur à la place d'une ou de plusieurs unités de données prévues selon la séquence ordonnée.

19. Procédé selon l'une quelconque des revendications précédentes,
**caractérisé en ce que** des unités de données sont préparées sur l'appareil de base et sont transmises avec un identifiant d'urgence spécial à l'équipement d'utilisateur et **en ce que** des unités de données avec cet identifiant d'urgence spécial sont préparées pour l'utilisateur quelle que soit la configuration individuelle de l'équipement d'utilisateur immédiatement après leur réception par l'équipement d'utilisateur à la place d'une ou de plusieurs unités de données prévues selon la séquence ordonnée.

20. Procédé selon l'une quelconque des revendications précédentes,
**caractérisé en ce qu'**au moins un attribut est affecté à chaque unité de données et est enregistré dans l'ensemble d'indications de l'unité de données et **en ce qu'**une instruction d'ordre est transmise de l'appareil de base à l'équipement d'utilisateur ou est entrée par l'utilisateur, laquelle amène l'appareil de base à aligner les unes derrière les autres des unités de données avec un certain attribut dans une séquence ordonnée et à les préparer dans cette séquence ordonnée à l'utilisateur.

21. Procédé selon la revendication précédente,
**caractérisé en ce que** dans l'ensemble d'indications d'une ou de plusieurs unités de données est stockée une instruction d'agencement positive ou négative qui contient des informations concernant :
- à quelle unité de données doit succéder cette unité de données dans une séquence ordonnée,
- à quelle unité de données ne doit pas succéder cette unité de données dans une séquence ordonnée,
- quelle unité de données doit suivre cette unité de données dans une séquence ordonnée, et/ou
- quelle unité de données ne doit pas suivre cette unité de données dans la séquence ordonnée.

22. Procédé selon l'une quelconque des revendications précédentes,
**caractérisé en ce qu'**une multitude de séquences ordonnées et de tables d'attribution de temps affectées à celles-ci sont transmises à l'équipement d'utilisateur et sont stockées dans l'équipement d'utilisateur, dans lequel les séquences ordonnées se différencient les unes des autres au niveau des unités de données alignées les unes derrière les autres dans elles et l'utilisateur peut sélectionner, en entrant un paramètre par le biais d'une interface utilisateur de l'équipement d'utilisateur, une séquence ordonnée à préparer.

23. Système de transmission et de préparation de données, comportant
- un appareil de base avec
a. un premier emplacement de stockage de base qui est attribué au stockage d'unités de données, et
b. un second emplacement de stockage de base qui est affecté au stockage d'au moins une séquence ordonnée et une table d'attribution de temps affectée à celle-ci d'une pluralité d'unités de données,
c. une unité de gestion de données coopérant avec les emplacements de stockage de base, qui est conçue
i. pour créer, à l'aide de critères prédéterminés ou entrés par un utilisateur, au moins une séquence ordonnée qui détermine une séquence temporelle d'une pluralité d'unités de données, et
ii. pour créer pour chaque séquence ordonnée une table d'attribution de temps dans laquelle à chaque instant de déroulement dans la séquence ordonnée est attribuée au moins une heure du jour prédéterminée, de préférence une heure du jour prédéterminée à une date prédéterminée et à chaque unité de données est attribuée au moins une heure du jour ou un instant de déroulement dans la table d'attribution de temps,
- un dispositif de transmission de données pour la transmission de plusieurs unités de données, d'au moins une séquence ordonnée et de la ou des tables d'attribution de temps affectées à celle-ci, de l'appareil de base à un équipement d'utilisateur,
- au moins un équipement d'utilisateur avec
a. un premier emplacement de stockage d'utilisateur, qui est attribué au stockage des unités de données reçues de l'appareil de base, et
b. un second emplacement de stockage d'utilisateur, qui est affecté au stockage d'au moins une séquence ordonnée et d'une table d'attribution de temps affectée à celle-ci d'une pluralité d'unités de données,
c. une horloge d'utilisateur, et
d. une unité de gestion de données d'utilisateur qui est conçue pour, à l'aide de l'heure du jour indiquée par l'horloge d'utilisateur, déterminer l'instant de déroulement, de la séquence ordonnée correspondante, attribué dans la table d'attribution de temps reçue par l'appareil de base et qui accède, à l'aide de la séquence ordonnée, à l'unité de données attribuée à cet instant de déroulement et la prépare pour l'utilisateur.

24. Système selon la revendication 23,
**caractérisé par** une unité de chiffrement qui est conçue pour chiffrer les unités de données avant leur transmission sur l'équipement d'utilisateur de manière telle qu'il est possible d'y accéder uniquement par le biais de l'équipement d'utilisateur et, à savoir, uniquement au moyen d'une séquence ordonnée transmise à l'équipement d'utilisateur.

25. Système selon la revendication 23 ou 24,
**caractérisé en ce que** le dispositif de transmission de données contient un émetteur, relié à l'appareil de base, qui transmet par une liaison radioélectrique les unités de données à transmettre, une ou des séquences ordonnées et une ou des tables d'attribution de temps sans fil à un récepteur relié à l'équipement d'utilisateur.

26. Système selon l'une quelconque des revendications précédentes 23 à 25,
**caractérisé en ce que** le dispositif de transmission de données est conçu pour transmettre les unités de données, une ou des séquences ordonnées et une ou des tables d'attribution de temps en tant que paquets successifs par le biais d'un canal multiplex de paquets.

27. Système selon l'une quelconque des revendications précédentes 23 à 26, **caractérisé en ce que** le dispositif de transmission de données est conçu pour transmettre les unités de données, une ou des séquences ordonnées et/ou une ou des tables d'attribution de temps dans une période de transmission qui est plus courte que la période de rendu que dure le rendu acoustique et/ou graphique des données audio ou vidéo définies par les unités de données.

28. Système selon l'une quelconque des revendications précédentes 23 à 27, **caractérisé en ce que** l'équipement d'utilisateur a une interface utilisateur pour la réception d'informations entrées par l'utilisateur et l'unité de gestion de données d'utilisateur est conçue pour relier les informations entrées par l'utilisateur logiquement aux unités de données, à la séquence ordonnée et/ou à la table d'attribution de temps et à modifier la séquence ordonnée.

29. Système selon l'une quelconque des revendications précédentes 23 à 28, **caractérisé par** un second dispositif de transmission de données pour la transmission de données de l'équipement d'utilisateur à l'appareil de base et **caractérisé en outre en ce que** l'équipement d'utilisateur a une interface utilisateur pour la réception d'informations entrées par l'utilisateur, et le second dispositif de transmission de données est conçu pour transmettre les informations entrées par l'utilisateur à l'appareil de base.

30. Système selon l'une quelconque des revendications précédentes 23 à 29, **caractérisé par** un second dispositif de transmission de données pour la transmission de données de l'équipement d'utilisateur à l'appareil de base et **caractérisé en outre en ce que** l'équipement d'utilisateur a une interface utilisateur pour la réception d'informations entrées par l'utilisateur et l'unité de gestion de données d'utilisateur est conçue pour relier les informations entrées par l'utilisateur logiquement à une unité de données, à une position de la séquence ordonnée et/ou à une heure du jour ou à une heure de déroulement, et le second dispositif de transmission de données est conçu pour transmettre les informations entrées par l'utilisateur ainsi qu'une identification de l'unité de données reliée aux informations, d'une position de la séquence ordonnée et/ou d'une heure du jour ou d'une heure de déroulement à l'appareil de base.

31. Système selon l'une quelconque des revendications précédentes 23 à 30, **caractérisé en ce que** l'équipement d'utilisateur et l'appareil de base sont conçus pour échanger les informations nécessaires à un achat d'une unité de données.

32. Système selon l'une quelconque des revendications précédentes 23 à 31, **caractérisé par** plusieurs équipements d'utilisateur, dans lequel chaque équipement d'utilisateur comprend une interface d'émission et de réception pour transmettre à un autre équipement d'utilisateur des unités de données, une ou des séquences ordonnées et/ou une ou des tables d'attribution de temps.

33. Produit-programme d'ordinateur qui, lorsqu'il se déroule sur un équipement d'utilisateur, exécute les étapes nécessaires, au niveau de l'équipement d'utilisateur, au déroulement du procédé selon l'une quelconque des revendications précédentes 1 à 22.

34. Produit-programme d'ordinateur qui, lorsqu'il se déroule sur un appareil de base, exécute les étapes nécessaires, au niveau de l'appareil de base, au déroulement du procédé selon l'une quelconque des revendications précédentes 1 à 22.

35. Équipement d'utilisateur, qui est programmé pour les étapes nécessaires au déroulement du procédé selon l'une quelconque des revendications précédentes 1 à 22 au niveau de l'équipement d'utilisateur.

36. Appareil de base, qui est programmé pour les étapes nécessaires au déroulement du procédé selon l'une quelconque des revendications précédentes 1 à 22 au niveau de l'appareil de base.
